# EUROPEAN PATENT APPLICATION

(11) **EP 4 564 934 A1**
(43) Date of publication of application: **04.06.2025**
(21) Application number: 23845721.2
(22) Date of filing: 28.07.2023
(51) Int. Cl.: H04W 52/02

(54) **ENERGY-SAVING SIGNAL TRANSMISSION METHOD AND APPARATUS, CONFIGURATION METHOD AND APPARATUS, AND DEVICE**

(30) Priority: 29.07.2022 CN 202210910653
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); SU, Yuwan, Beijing 100085 (CN); YANG, Meiying, Beijing 100085 (CN); LI, Yaomin, Beijing 100085 (CN)
(74) Representative: dompatent von Kreisler Selting Werner - Partnerschaft von Patent- und Rechtsanwälten mbB
(86) International application number: PCT/CN2023/109964
(87) International publication number: WO 2024/022517

(57) **Abstract**

A method and an apparatus for transmitting an energy-saving signal, a configuration method and apparatus, and a device are provided. The method includes: obtaining, by a terminal, first information, where the first information is used for determining a transmission occasion of an energy-saving signal, and the energy-saving signal is used for assisting in or triggering an energy-saving-related operation of a network-side device; and determining, by the terminal, the transmission occasion of the energy-saving signal according to the first information.

## Description

### CROSS-REFERENCE TO RELATED APPLICATION

The present application claims a priority to the Chinese patent application No. 202210910653.8 filed in China on July 29, 2022, a disclosure of which is incorporated herein by reference in its entirety.

### TECHNICAL FIELD

The present disclosure relates to the field of communication technology, in particular to a method and an apparatus for transmitting an energy-saving signal, a configuration method and apparatus, and a device.

### BACKGROUND

Network energy saving is very important for environmental sustainability, reduction of environmental impact (greenhouse gas emission), and reduction of operation costs. With the popularization of 5^{th} generation mobile communication technology (5G) in all industries and geographical regions, to process more advanced services and applications that require extremely high data rates, networks become increasingly dense, and more antennas, larger bandwidths, and more frequency bands are used. The impact of 5G on the environment needs to be brought under control, and new solutions need to be developed to improve network energy saving.

In conventional technologies, most energy consumption results from radio access networks (RANs), especially active antenna units (AAUs), while data centers and optical fiber transmission account for small proportions. The power consumption of radio access may include two parts, namely, a dynamic part that is consumed only when data is being transmitted or received, and a static part that keeps being consumed to keep essential operations of a radio access device, even when no data is being transmitted or received.

### SUMMARY

An objective of the embodiments of the present disclosure is to provide a method and an apparatus for transmitting an energy-saving signal, a configuration method and apparatus, and a device, to resolve the problem in the related art that a terminal cannot learn related information of energy-saving-related operations on a base station side, which as a result impacts a service of the terminal.

To resolve the foregoing problem, the present disclosure provides in some embodiments a method for transmitting an energy-saving signal, the method including:
obtaining first information, where the first information is used for determining a transmission occasion of an energy-saving signal, and the energy-saving signal is used for assisting in or triggering an energy-saving-related operation of a network-side device; and
determining the transmission occasion of the energy-saving signal according to the first information.

The first information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

The first parameter includes at least one of:
a parameter of a reference signal;
a parameter of a physical layer transmission resource; or
a parameter of a first measurement.

The first parameter is: the first parameter of a serving cell of a terminal, or, the first parameter of a neighboring cell of a terminal.

The reference signal includes at least one of:
a synchronization signal/physical broadcast channel (SS/PBCH) block (SSB);
an SSB burst set;
a reference signal for energy saving of the network-side device;
a channel state information reference signal (CSI-RS);
a tracking reference signal (TRS);
a positioning reference signal (PRS); or
a sounding reference signal (SRS).

The physical layer transmission resource includes at least one of:
a RACH occasion (RO);
a scheduling request occasion;
a physical downlink control channel (PDCCH) monitoring occasion;
a physical uplink control channel (PUCCH) transmission occasion; or
a physical layer shared channel.

The first measurement includes at least one of:
a radio resource management (RRM) measurement;
a channel state information (CSI) measurement;
a radio link failure (RLF) measurement;
a beam management measurement; or
an energy saving related measurement of the network-side device.

The determining, by the terminal, the transmission occasion of the energy-saving signal according to the first information includes:
determining, by the terminal according to the first parameter and the association relationship between the information of the resource occupied by the transmission occasion and the first parameter, the information of the resource occupied by the transmission occasion of the energy-saving signal.

The information of the resource occupied by the transmission occasion includes at least one of:
time domain resource information;
frequency domain resource information;
spatial domain resource information; or
code domain resource information.

The method further includes:
determining, according to the time domain resource information, at least one of periodic related information of a time domain resource in which the transmission occasion is located, semi-persistent related information of the time domain resource, or aperiodic related information of the time domain resource in one periodicity.

The method further includes:
determining, according to the frequency domain resource information, at least one of related information of an active bandwidth part (BWP) occupied by a frequency domain resource in which the transmission occasion is located, related information of a specific band occupied by the frequency domain resource, or related information of an initial BWP occupied by the frequency domain resource.

The method further includes:
determining, by the terminal, beam information corresponding to the transmission occasion according to the spatial domain resource information, where the beam information is explicitly indicated or implicitly indicated in the spatial domain resource information.

A manner of obtaining the first information includes:
receiving second information transmitted by the network-side device; and/or obtaining third information pre-defined or configured in advance,
where the first information includes the second information and/or the third information.

The third information includes a candidate resource set of transmission occasions pre-defined or configured in advance; and
the second information further includes: indication information transmitted by the network-side device, where the indication information is used for indicating at least one transmission occasion corresponding to the candidate resource set.

Receiving the second information transmitted by the network-side device includes:
receiving, through first signaling, the second information transmitted by the network-side device, where the first signaling includes at least one of:
broadcast signaling;
common signaling; or
terminal specific signaling.

The method further includes:
transmitting the energy-saving signal on any transmission occasion;
   or
transmitting the energy-saving signal on every transmission occasion;
   or
transmitting the energy-saving signal on at least one subset of a transmission occasion set;
   or
transmitting the energy-saving signal on a transmission occasion when a specific condition is met.

A plurality of terminals transmit energy-saving signals on different transmission occasions, where the transmission occasions of the energy-saving signals determined by the plurality of terminals respectively meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

A plurality of terminals transmit energy-saving signals on a same transmission occasion.

The energy-saving-related operation includes at least one of:
waking up a sleeping cell; or
triggering the network-side device to perform state switching between an energy-saving state and a non-energy-saving state.

The present disclosure further provides in some embodiments a configuration method of a transmission occasion of an energy-saving signal, the method including:
transmitting second information to a terminal, where the second information is used for the terminal to determine the transmission occasion of the energy-saving signal, and the energy-saving signal is used for assisting in or triggering an energy-saving-related operation of a network-side device.

The second information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

The first parameter includes at least one of:
a parameter of a reference signal;
a parameter of a physical layer transmission resource; or
a parameter of a first measurement.

The first parameter is: the first parameter of a serving cell of the terminal, or, the first parameter of a neighboring cell of the terminal.

The reference signal includes at least one of:
an SS/PBCH block SSB;
an SSB burst set;
a reference signal for energy saving of the network-side device;
a CSI-RS;
a TRS;
a PRS; or
an SRS.

The physical layer transmission resource includes at least one of:
an RO;
a scheduling request occasion;
a PDCCH monitoring occasion;
a PUCCH transmission occasion; or
a physical layer shared channel.

The first measurement includes at least one of:
an RRM measurement;
a CSI measurement;
an RLF measurement;
a beam management measurement; or
an energy saving related measurement of the network-side device.

The information of the resource occupied by the transmission occasion includes at least one of:
time domain resource information;
frequency domain resource information;
spatial domain resource information; or
code domain resource information.

The time domain resource information includes at least one of:
periodic related information of a time domain resource;
semi-persistent related information of the time domain resource; or
aperiodic related information of the time domain resource in one periodicity.

The frequency domain resource information includes at least one of:
related information of an active BWP occupied by a frequency domain resource;
related information of a specific band occupied by the frequency domain resource; or
related information of an initial BWP occupied by the frequency domain resource.

The spatial domain resource information includes at least one of:
explicitly indicated beam information; or
implicitly indicated beam information.

The second information further includes:
indication information, where the indication information is used for indicating at least one transmission occasion corresponding to a candidate resource set of transmission occasions pre-defined or configured in advance.

The transmitting the second information to the terminal includes:
transmitting the second information to the terminal through first signaling, where the first signaling includes at least one of:
broadcast signaling;
common signaling; or
terminal specific signaling.

The method further includes:
performing energy-saving signal monitoring on every preconfigured transmission occasion;
   or
performing energy-saving signal monitoring on one pre-defined transmission occasion;
   or
performing energy-saving signal monitoring on at least one subset of a transmission occasion set;
   or
performing energy-saving signal monitoring on a transmission occasion when a specific condition is met.

The method further includes:
performing a corresponding energy-saving-related operation according to a detected energy-saving signal, where the energy-saving-related operation includes at least one of:
waking up a sleeping cell; or
triggering the network-side device to perform state switching between an energy-saving state and a non-energy-saving state.

A plurality of terminals transmit energy-saving signals on different transmission occasions, where the transmission occasions of the energy-saving signals configured for the plurality of terminals meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

A plurality of terminals transmit energy-saving signals on a same transmission occasion.

The present disclosure further provides in some embodiments a terminal, including a memory, a transceiver, and a processor,
where the memory is configured to store a computer program; the transceiver is configured to transmit and receive data under the control of the processor; and the processor is configured to read the computer program in the memory and perform the following operations:
obtaining first information, where the first information is used for determining a transmission occasion of an energy-saving signal, and the energy-saving signal is used for assisting in or triggering an energy-saving-related operation of a network-side device; and
determining the transmission occasion of the energy-saving signal according to the first information.

The first information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

The first parameter includes at least one of:
a parameter of a reference signal;
a parameter of a physical layer transmission resource; or
a parameter of a first measurement.

In an optional embodiment, the first parameter is: the first parameter of a serving cell of the terminal, or, the first parameter of a neighboring cell of the terminal.

The reference signal includes at least one of:
an SS/PBCH block SSB;
an SSB burst set;
a reference signal for energy saving of the network-side device;
a CSI-RS;
a TRS;
a PRS; or
an SRS.

The physical layer transmission resource includes at least one of:
an RO;
a scheduling request occasion;
a PDCCH monitoring occasion;
a PUCCH transmission occasion; or
a physical layer shared channel.

The first measurement includes at least one of:
an RRM measurement;
a CSI measurement;
an RLF measurement;
a beam management measurement; or
an energy saving related measurement of the network-side device.

The processor is further configured to read the computer program in the memory and perform the following operation:
determining, according to the first parameter and the association relationship between the information of the resource occupied by the transmission occasion and the first parameter, the information of the resource occupied by the transmission occasion of the energy-saving signal.

In an optional embodiment, the information of the resource occupied by the transmission occasion includes at least one of:
time domain resource information;
frequency domain resource information;
spatial domain resource information; or
code domain resource information.

The processor is further configured to read the computer program in the memory and perform the following operation:
determining, according to the time domain resource information, at least one of periodic related information of a time domain resource in which the transmission occasion is located, semi-persistent related information of the time domain resource, or aperiodic related information of the time domain resource in one periodicity.

The processor is further configured to read the computer program in the memory and perform the following operation:
determining, according to the frequency domain resource information, at least one of an active BWP occupied by a frequency domain resource in which the transmission occasion is located, related information of a specific band occupied by the frequency domain resource, or related information of an initial BWP occupied by the frequency domain resource.

The processor is further configured to read the computer program in the memory and perform the following operation:
determining beam information corresponding to the transmission occasion according to the spatial domain resource information, where the beam information is explicitly indicated or implicitly indicated in the spatial domain resource information.

A manner of obtaining the first information includes:
receiving second information transmitted by the network-side device; and/or obtaining third information pre-defined or configured in advance,
where the first information includes the second information and/or the third information.

In an optional embodiment, the third information includes a candidate resource set of transmission occasions pre-defined or configured in advance; and
the second information further includes: indication information transmitted by the network-side device, where the indication information is used for indicating at least one transmission occasion corresponding to the candidate resource set.

The processor is further configured to read the computer program in the memory and perform the following operation:
receiving, through first signaling, the second information transmitted by the network-side device, where the first signaling includes at least one of:
broadcast signaling;
common signaling; or
terminal specific signaling.

The processor is further configured to read the computer program in the memory and perform the following operation:
transmitting the energy-saving signal on any transmission occasion;
   or
transmitting the energy-saving signal on every transmission occasion;
   or
transmitting the energy-saving signal on at least one subset of a transmission occasion set;
   or
transmitting the energy-saving signal on a transmission occasion when a specific condition is met.

A plurality of terminals transmit energy-saving signals on different transmission occasions, where the transmission occasions of the energy-saving signals determined by the plurality of terminals respectively meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

A plurality of terminals transmit energy-saving signals on a same transmission occasion.

The energy-saving-related operation includes at least one of:
waking up a sleeping cell; or
triggering the network-side device to perform state switching between an energy-saving state and a non-energy-saving state.

The present disclosure further provides in some embodiments an apparatus for transmitting an energy-saving signal, including:
an obtaining unit, configured to obtain first information, where the first information is used for determining a transmission occasion of an energy-saving signal, and the energy-saving signal is used for assisting in or triggering an energy-saving-related operation of a network-side device; and
a determining unit, configured to determine the transmission occasion of the energy-saving signal according to the first information.

The present disclosure further provides in some embodiments a network-side device, including a memory, a transceiver, and a processor,
where the memory is configured to store a computer program; the transceiver is configured to transmit and receive data under the control of the processor; and the processor is configured to read the computer program in the memory and perform the following operation:
transmitting second information to a terminal, where the second information is used for the terminal to determine a transmission occasion of an energy-saving signal, and the energy-saving signal is used for assisting in or triggering an energy-saving-related operation of the network-side device.

The second information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

The first parameter includes at least one of:
a parameter of a reference signal;
a parameter of a physical layer transmission resource; or
a parameter of a first measurement.

The first parameter is: the first parameter of a serving cell of the terminal, or, the first parameter of a neighboring cell of the terminal.

The reference signal includes at least one of:
an SS/PBCH block SSB;
an SSB burst set;
a reference signal for energy saving of the network-side device;
a CSI-RS;
a TRS;
a PRS; or
an SRS.

The physical layer transmission resource includes at least one of:
an RO;
a scheduling request occasion;
a PDCCH monitoring occasion;
a PUCCH transmission occasion; or
a physical layer shared channel.

The first measurement includes at least one of:
an RRM measurement;
a CSI measurement;
an RLF measurement;
a beam management measurement; or
an energy saving related measurement of the network-side device.

The information of the resource occupied by the transmission occasion includes at least one of:
time domain resource information;
frequency domain resource information;
spatial domain resource information; or
code domain resource information.

The time domain resource information includes at least one of:
periodic related information of a time domain resource;
semi-persistent related information of the time domain resource; or
aperiodic related information of the time domain resource in one periodicity.

The frequency domain resource information includes at least one of:
related information of an active BWP occupied by a frequency domain resource;
related information of a specific band occupied by the frequency domain resource; or
related information of an initial BWP occupied by the frequency domain resource.

The spatial domain resource information includes at least one of:
explicitly indicated beam information; or
implicitly indicated beam information.

The second information further includes:
indication information, where the indication information is used for indicating at least one transmission occasion corresponding to a candidate resource set of transmission occasions pre-defined or configured in advance.

The processor is further configured to read the computer program in the memory and perform the following operation:
transmitting the second information to the terminal through first signaling, where the first signaling includes at least one of:
broadcast signaling;
common signaling; or
terminal specific signaling.

The processor is further configured to read the computer program in the memory and perform the following operation:
performing energy-saving signal monitoring on every preconfigured transmission occasion;
   or
performing energy-saving signal monitoring on one pre-defined transmission occasion;
   or
performing energy-saving signal monitoring on at least one subset of a transmission occasion set;
   or
performing energy-saving signal monitoring on a transmission occasion when a specific condition is met.

The processor is further configured to read the computer program in the memory and perform the following operation:
performing a corresponding energy-saving-related operation according to a detected energy-saving signal, where the energy-saving-related operation includes at least one of:
waking up a sleeping cell; or
triggering the network-side device to perform state switching between an energy-saving state and a non-energy-saving state.

A plurality of terminals transmit energy-saving signals on different transmission occasions, where the transmission occasions of the energy-saving signals configured for the plurality of terminals meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

In an optional embodiment, a plurality of terminals transmit energy-saving signals on a same transmission occasion.

The present disclosure further provides in some embodiments a configuration apparatus of a transmission occasion of an energy-saving signal, including:
a transmission unit, configured to transmit second information to a terminal, where the second information is used for the terminal to determine the transmission occasion of the energy-saving signal, and the energy-saving signal is used for assisting in or triggering an energy-saving-related operation of a network-side device.

The present disclosure further provides in some embodiments a processor-readable storage medium, where the processor-readable storage medium stores a computer program, and the computer program is configured to cause a processor to perform the foregoing method.

The foregoing technical solutions of the present disclosure at least have the following beneficial effects.

In the method and apparatus for transmitting an energy-saving signal, the configuration method and apparatus, and the device in the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

### BRIEF DESCRIPTION OF THE DRAWINGS

Fig. 1 is a block diagram of a wireless communication system to which an embodiment of the present disclosure is applicable;
Fig. 2 is a flowchart of a method for transmitting an energy-saving signal according to an embodiment of the present disclosure;
Fig. 3 is a flowchart of a configuration method of a transmission occasion of an energy-saving signal according to an embodiment of the present disclosure;
Fig. 4 is a first schematic principle diagram of Example 1 according to an embodiment of the present disclosure;
Fig. 5 is a second schematic principle diagram of Example 1 according to an embodiment of the present disclosure;
Fig. 6 is a schematic principle diagram of Example 2 according to an embodiment of the present disclosure;
Fig. 7 is a schematic principle diagram of Example 3 according to an embodiment of the present disclosure;
Fig. 8 is a schematic principle diagram of Example 4 according to an embodiment of the present disclosure;
Fig. 9 is a schematic principle diagram of Example 5 according to an embodiment of the present disclosure;
Fig. 10 is a schematic principle diagram of Example 7 according to an embodiment of the present disclosure;
Fig. 11 is a schematic structural diagram of a terminal according to an embodiment of the present disclosure;
Fig. 12 is a schematic structural diagram of an apparatus for transmitting an energy-saving signal according to an embodiment of the present disclosure;
Fig. 13 is a schematic structural diagram of a network-side device according to an embodiment of the present disclosure; and
Fig. 14 is a schematic structural diagram of a configuration apparatus of a transmission occasion of an energy-saving signal according to an embodiment of the present disclosure.

### DETAILED DESCRIPTION

To make the technical problems, the technical solutions, and advantages of the present disclosure clearer, detailed descriptions are provided below with reference to the accompanying drawings and specific embodiments.

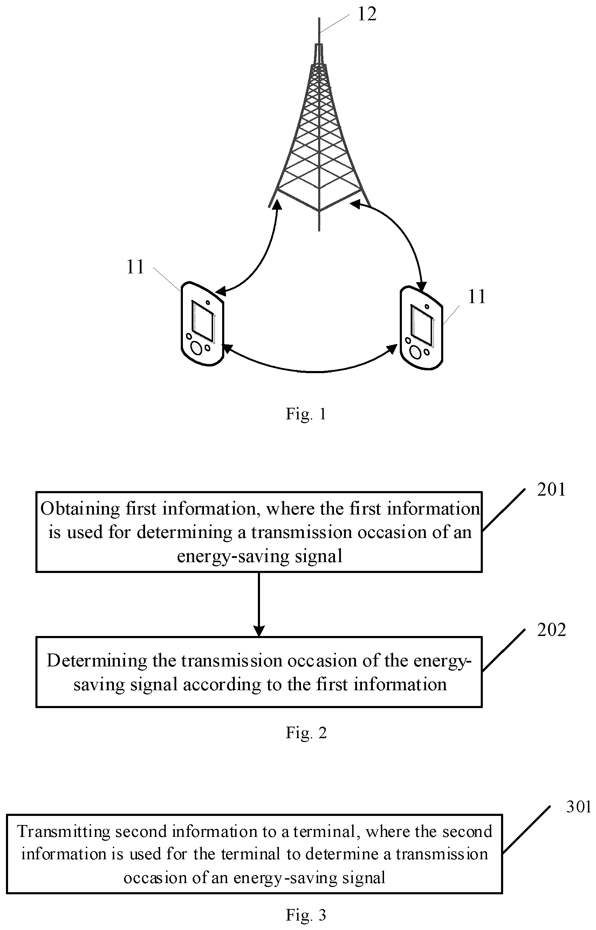

Fig. 1 is a block diagram of a wireless communication system to which an embodiment of the present disclosure is applicable. The wireless communication system includes a terminal device 11 and a network-side device 12. The terminal device 11 may be referred to as a terminal or user equipment (UE). It needs to be noted that a specific type of the terminal 11 is not limited in some embodiments of the present disclosure. The network-side device 12 may be a base station or a core network (CN). It needs to be noted that a base station in a new radio (NR) system is only used as an example in the embodiments of the present disclosure, but a specific type of the base station is not limited.

The term "and/or" in the embodiments of the present disclosure describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

In the embodiments of the present disclosure, the term "a plurality of" means two or more, and another quantifier is similar to this.

The following clearly and completely describes the technical solutions in the embodiments of the present disclosure with reference to the accompanying drawings in the embodiments of the present disclosure. Apparently, the described embodiments are only some embodiments of the present disclosure rather than all the embodiments. All other embodiments obtained by persons of ordinary skill in the art based on the embodiments of the present disclosure without creative efforts fall within the protection scope of the present disclosure.

The technical solution provided in the embodiments of the present disclosure is applicable to various systems, especially a 5G system (5GS). For example, the systems to which the technical solution is applicable may be a global system for mobile communications (GSM), a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G NR system, and the like. All the various systems include a terminal device and a network device. The system may further include a CN part, for example, an evolved packet system (EPS), a 5GS, and the like.

A terminal device in the embodiments of the present disclosure may be a device that provides a user with voice and/or data connectivity, a handheld device having a wireless connection function, another processing device connected to a wireless modem, or the like. In different systems, the terminal device may have different names. For example, in a 5GS, the terminal device may be referred to as UE. The wireless terminal device may communicate with one or more CNs through a RAN. The wireless terminal device may be a mobile terminal device, for example, a mobile phone (or referred to as a "cellular" phone) or a computer equipped with a mobile terminal device, for example, may be a portable, pocket-sized, handheld, computer built-in or in-vehicle mobile apparatus, which exchanges voice and/or data with the RAN. For example, the wireless terminal may be a device such as a personal communication service (PCS) phone, a cordless phone set, a session initiation protocol (SIP) phone, a wireless local loop (WLL) station or a personal digital assistant (PDA). The wireless terminal device may also be referred to as a system, a subscriber unit, a subscriber station, a mobile station, a mobile, a remote station, an access point, a remote terminal, an access terminal, a user terminal, a user agent, a user device. This is not limited in the embodiments of the present disclosure.

The network device in the embodiments of the present disclosure may be a base station. The base station may include a plurality of cells that provide a service a terminal. According to different specific application scenarios, the base station may also be referred to as an access point, or may be a device that communicates with the wireless terminal device through one or more sectors on an air interface in an access network, or may have another name. The network device may be configured to interchange a received over-the-air frame with an internet protocol (IP) packet and used as a router between the wireless terminal device and the remaining part of the access network. The remaining part of the access network may include an IP communication network. The network device may further coordinate attribute management of the air interface. For example, the network device in the embodiments of the present disclosure may be a base transceiver station (BTS) in a GSM or CDMA, or may be a network device (a NodeB) in WCDMA, or may be an evolved node B (e-NodeB, eNB) in LTE or a 5G base station (gNB) in a 5G network architecture (next generation system), or may be a home evolved Node B (HeNB), a relay node, a femto base station, a pico base station, or the like. This is not limited in the embodiments of the present disclosure. In some network structures, the network device may include a centralized unit (CU) node and a distributed unit (DU) node. The CU and the DU may also be geographically separate.

The network device and the terminal device may respectively use one or more antennas to perform multi input multi output (MIMO) transmission. The MIMO transmission may be a single user MIMO (SU-MIMO) or a multiple user MIMO (multiple user MIMO). According to the forms and quantity of antenna combinations, the MIMO transmission may be 2D-MIMO, 3D-MIMO, FD-MIMO, or massive-MIMO, or may be diversity transmission, or precoded transmission, beamforming transmission, and the like.

With the agenda of network energy saving, a base station with low load or empty load is turned off or put to sleep to implement network energy saving. However, in the related art, even if the base station adopts particular energy saving measures, for example, sleeps or stops transmitting or receiving a signal, such measures are behavior implemented by the base station. A terminal does not know when the base station enters an energy-saving state. In this case, the terminal considers by default that the base station remains in a state of providing a service. When the base station cannot be woken up or turned on, a service of the terminal is impacted.

As shown in Fig. 2, the present disclosure provides in some embodiments a method for transmitting an energy-saving signal, performed by a terminal, the method including the following steps 201 and 202.

The step 201 includes: obtaining, by the terminal, first information, where the first information is used for determining a transmission occasion of an energy-saving signal, and the energy-saving signal is used for assisting in or triggering an energy-saving-related operation of a network-side device.

The step 202 includes: determining, by the terminal, the transmission occasion of the energy-saving signal according to the first information.

Optionally, the transmission occasion of the energy-saving signal is used for the terminal to transmit the energy-saving signal and/or for the network-side device to monitor the energy-saving signal.

Optionally, at least one transmission occasion may be configured for the energy-saving signal of one terminal within one periodicity, and a duration of one transmission occasion may correspond to one time domain unit.

Optionally, at least one transmission occasion may be configured for the energy-saving signal of one terminal within a specific time window of one periodicity, or the terminal may transmit the energy-saving signal within a time window of one periodicity. A related parameter of the time window may be obtained in at least one manner in the following: configured through broadcast signaling or higher layer signaling, or pre-defined, or started and/or ended under a specific condition, for example, started and/or ended when a base station is in an energy-saving state or under a specific indication, for example, started when the terminal receives a specific energy saving indication from a network side or when a specific timer is started, and/or, ended when the specific timer expires or is interrupted. The related parameter of the time window includes at least one of the following parameters: a starting position, an ending position, a duration, and the like of the time window.

Optionally, the energy-saving-related operation mentioned in the embodiments of the present disclosure includes at least one of:
waking up a sleeping cell; or
triggering the network-side device to perform state switching between an energy-saving state and a non-energy-saving state. The non-energy-saving state may also be referred to as an operating state, a normal state, or the like, and is not specifically limited herein.

"The network-side device being in an energy-saving state" may be understood as that the network-side device is turned off or sleeps.

It needs to be noted that the "energy-saving signal" mentioned in the embodiments of the present disclosure may also be referred to as an energy-saving signal or energy-saving signaling or a message used for energy saving, and is not specifically limited herein.

In at least one embodiment of the present disclosure, the first information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

In other words, in the embodiments of the present disclosure, the transmission occasion of the energy-saving signal is separately configured through the first resource information, or may have an association relationship with the first parameter and may be configured through the second resource information.

The first parameter includes at least one of:
a parameter of a reference signal;
a parameter of a physical layer transmission resource; or
a parameter of a first measurement.

In other words, the transmission occasion of the energy-saving signal is associated with the reference signal and/or the physical layer transmission resource and/or the first measurement, and the terminal determines, according to a related parameter (i.e., the first parameter) of the reference signal and/or the physical layer transmission resource and/or the first measurement and the association relationship, the information of the resource occupied by the transmission occasion.

In an optional embodiment, the first parameter is: the first parameter of a serving cell of the terminal, or, the first parameter of a neighboring cell of the terminal.

For example, the reference signal is a reference signal transmitted by the serving cell or a reference signal transmitted by the neighboring cell. For another example, the physical layer transmission resource is a physical layer transmission resource of the serving cell or a physical layer transmission resource of the neighboring cell. For still another example, the first measurement is a first measurement of the serving cell or a first measurement of the neighboring cell. The serving cell may be a current serving cell, or may be a primary cell (PCell) in a master cell group (MCG), or may be a primary secondary cell (PSCell) in a secondary cell group (SCG), or may be a special cell (SpCell), or may be a secondary cell (SCell). The neighboring cell may be a neighboring cell in an energy-saving state, or may be a small cell within a coverage area of the serving cell or a neighboring cell having an overlapping coverage area, or may be an SCell in a carrier aggregation scenario, or may be a neighboring cell in a homogeneous network, or may be any cell in multi-radio dual connectivity (MR-DC).

It needs to be further noted that the neighboring cell mentioned in the embodiments of the present disclosure is mainly a cell in an energy-saving state, and may be a cell that is different from or the same as the serving cell, which is not limited in this solution.

In an optional embodiment of the present disclosure, the reference signal includes at least one of:
an SS/PBCH block (SSB);
an SSB burst set;
a reference signal for energy saving of the network-side device, where the reference signal for energy saving of the network-side device may be an existing reference signal with a specific transmission pattern when the base station is in an energy-saving state, or may be a newly added reference signal, and optionally, the reference signal may be referred to as a discovery reference signal (DRS);
a CSI-RS;
a TRS;
a PRS; or
an SRS.

For example, an example in which the energy-saving signal is associated with an SSB/SSB burst set transmitted by the serving cell is used for description.

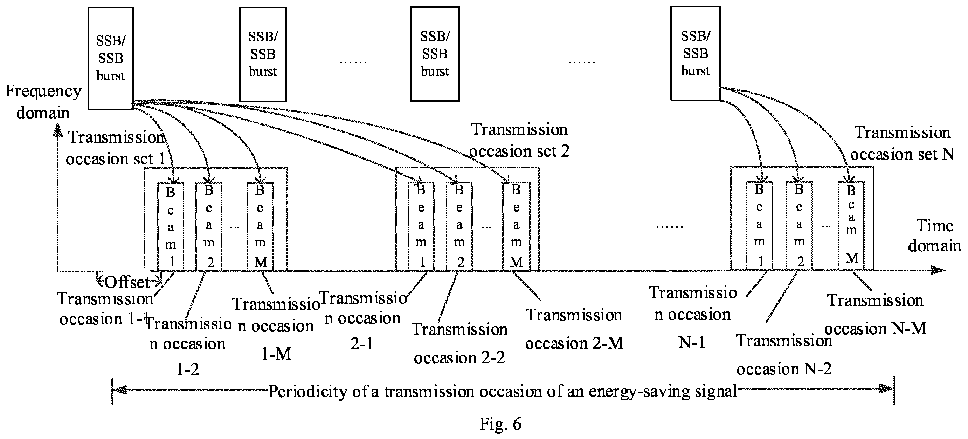

Periodic related information of a time domain resource, for example, a periodicity, in which the transmission occasion of the energy-saving signal is located has a particular association with the SSB burst set. The periodicity of the transmission occasion of the energy-saving signal is K1 times or one K1^{th} of an SSB burst periodicity, where K1 is an integer greater than or equal to 1. When the periodicity of the transmission occasion is K1 times of the SSB burst periodicity, it means that the periodicity of the transmission occasion is specifically shown in Fig. 6.

A time domain position of the transmission occasion or a transmission occasion set of the energy-saving signal in one periodicity is associated with a specific SSB burst or a specific SSB or a specific SSB set. A specific example of an association relationship is as follows:

the transmission occasion or a specific (for example, the first/the last/an n^{th}) transmission occasion in the transmission occasion set has a particular offset value from a target SSB. The transmission occasion may be located before the target SSB or may be located after the target SSB. Sequential positions may be represented through the positive and negative values of the offset value. For example, the offset value being positive represents that the transmission occasion is located after the SSB, and in contrast, the offset value being negative represents that the transmission occasion is located before the SSB. The target SSB may be any one of a specific SSB burst or a specific SSB or a specific SSB set, and may be configured or indicated through at least one of broadcast signaling, higher layer signaling, or media access control (MAC) layer signaling. The target SSB may be a numbered or k^{th} SSB or SSB burst in a specific radio frame, or may be a numbered or k^{th} SSB or SSB burst in the periodicity of the transmission occasion.

A plurality of transmission occasions or transmission occasion sets may be associated with a same SSB burst or SSB, or may be associated with different SSB bursts or SSBs, which may be specifically configured or indicated through at least one of broadcast signaling, higher layer signaling, or MAC layer signaling.

For another example, the transmission occasion of the energy-saving signal may have an association relationship with a reference signal, for example, an SSB, a reference signal for energy saving of the network-side device, or the like, transmitted by the neighboring cell. The reference signal for energy saving of the network-side device may be an existing reference signal with a specific transmission pattern when the base station is in an energy-saving state, or may be a newly added reference signal, which is not limited in this solution. The transmission occasion of the energy-saving signal may have an association relationship with an SSB transmitted by the neighboring cell. The reference signal transmitted by the neighboring cell may be configured by the serving cell, or may be configured by the neighboring cell, or may be prestored by the terminal, or may be obtained through blind monitoring by the terminal. The neighboring cell may be a neighboring cell in an energy-saving state, or may be a neighboring cell in a normal service state.

When the terminal learns related information of the reference signal of the neighboring cell, the terminal determines the transmission occasion of the energy-saving signal based on the reference signal of the neighboring cell. For example, details are as follows:

when the terminal learns a configuration that is transmitted by the neighboring cell and is of the parameter of the reference signal for energy saving of the network-side device, the terminal further learns an association relationship between the energy-saving signal and the reference signal for energy saving of the network-side device, so that the transmission occasion of the energy-saving signal can be further obtained.

The association relationship between the transmission occasion of the energy-saving signal and the reference signal for energy saving of the network-side device has at least one of:
the transmission occasion has a particular offset value from a starting position or an ending position of the reference signal for energy saving of the network-side device, where the offset value may be a positive value or may be a negative value, i.e., may be located after the reference signal for energy saving of the network-side device or may be located before the reference signal for energy saving of the network-side device; or
the transmission occasion has a particular offset value from a time domain position of the last reference signal for energy saving of the network-side device in a periodicity of the reference signal for energy saving of the network-side device.

The transmission occasion has a particular offset value from a specific reference signal for energy saving of the network-side device in the periodicity of the reference signal for energy saving of the network-side device, where the offset value may be a positive value, may be a negative value, or may be a zero value or a default value, i.e., may be located after the specific reference signal for energy saving of the network-side device or may be located before the specific reference signal for energy saving of the network-side device. The transmission occasion may be a specific transmission occasion or the first transmission occasion or the last transmission occasion in the transmission occasion set of the energy-saving signal, or may be a specific symbol or a specific slot in the transmission occasion.

The foregoing example is also applicable to at least one of reference signals such as the reference signal for energy saving of the network-side device, the CSI-RS, the TRS, the PRS, the SRS, and the like. When a cell is in different energy-saving states, the transmission occasion of the energy-saving signal may have an association relationship with different reference signals. For example, the energy-saving states of the cell may include three states, namely, a state 1, a state 2, and a state 3, which respectively correspond to the normal service state, a light sleep state, and a deep sleep state. When the cell is in the normal service state, the transmission occasion of the energy-saving signal has an association relationship with the CSI-RS. When the cell is in the light sleep state, the transmission occasion of the energy-saving signal has an association relationship with the TRS. When the cell is in the deep sleep state, the transmission occasion of the energy-saving signal has an association relationship with the SSB. The foregoing example is only used for description, and does not specifically constitute a limitation.

In another optional embodiment of the present disclosure, the physical layer transmission resource includes at least one of:
an RO;
a scheduling request occasion;
a PDCCH monitoring occasion;
a PUCCH transmission occasion; or
a physical layer shared channel, including a physical downlink shared channel (PDSCH) and/or a physical uplink shared channel (PUSCH).

For example, an example in which the energy-saving signal is associated with the RO configured by the serving cell for the terminal is used for description.

The transmission occasion of the energy-saving signal may be associated with the RO configured by the serving cell for the terminal. The periodic related information of the time domain resource in which the transmission occasion of the energy-saving signal is located, for example, the periodicity of the transmission occasion of the energy-saving signal, may be N times or 1/N of a physical random access channel (PRACH) periodicity or a PRACH association periodicity, where N is an integer greater than or equal to 1. The transmission occasion or the transmission occasion set of the energy-saving signal is associated with a specific PRACH periodicity or PRACH association periodicity, and the periodicity of the transmission occasion of the energy-saving signal may be determined according to a system frame number index of the specific PRACH periodicity. The specific PRACH periodicity may be configured or indicated through broadcast signaling and/or higher layer signaling.

For another example, the transmission occasion of the energy-saving signal has a particular offset value from a specific RO of the terminal. The offset value may be a positive value, may be a negative value, or may be a zero value or a default value. The transmission occasion of the energy-saving signal may be located in a same slot as the RO, or may be located in an uplink slot other than the slot in which the RO is located. The offset value may be an offset value in time domain, or may be an offset value in frequency domain. The transmission occasion may be a specific transmission occasion or the first transmission occasion or the last transmission occasion in the transmission occasion set of the energy-saving signal, or may be a specific symbol or a specific slot in the transmission occasion. The specific RO may be a specific symbol in the specific RO or a specific symbol of a slot in which the specific RO is located, for example, the first specific symbol, or a specific value configured and indicated by the base station, or a specific position defined in a protocol. The offset value in frequency domain may be a difference between a frequency domain starting position or a frequency domain end position of the transmission occasion and a specific frequency domain position, for example, a frequency domain starting position, ending position, or the like, of the specific RO. The offset value in frequency domain may be a quantity of frequency domain resource elements. A specific value is configured and indicated by the base station or defined in a protocol. The transmission occasion of the energy-saving signal is associated with the RO, so that signaling overhead for configuring a parameter of the transmission occasion of the energy-saving signal on a base station side can be reduced. In addition, when the transmission occasion of the energy-saving signal is multiplexed with the RO, transmission resources of the Energy-saving signal can be reduced.

The foregoing example is also applicable to at least one of physical layer transmission resources such as the scheduling request occasion, the PDCCH monitoring occasion, the PUCCH transmission occasion, the physical layer shared channel, and the like. When a cell is in different energy-saving states, the transmission occasion of the energy-saving signal may have an association relationship with different physical layer transmission resources. For example, the energy-saving states of the cell may include three states, namely, a state 1, a state 2, and a state 3, which respectively correspond to the normal service state, a light sleep state, and a deep sleep state. When the cell is in the normal service state, the transmission occasion of the energy-saving signal has an association relationship with the PUSCH. When the cell is in the light sleep state, the transmission occasion of the energy-saving signal has an association relationship with the PUCCH. When the cell is in the deep sleep state, the transmission occasion of the energy-saving signal has an association relationship with the RO. The foregoing example is only used for description, and does not specifically constitute a limitation.

Optionally, the transmission occasion of the energy-saving signal may be a subset or a universal set of an RO set.

In an optional embodiment, on the specific RO, behavior of transmitting a signal by the terminal includes any one in the following:
transmitting, by the terminal, an energy-saving signal or a preamble, which may be based on a configured priority, or may be based on a priority under a specific condition, or may be based on a pre-defined priority; and
transmitting, by the terminal, an energy-saving signal and a preamble, which may be distinguished by the base station based on configured different signals.

In still another optional embodiment of the present disclosure, the first measurement includes at least one of:
an RRM measurement;
a CSI measurement;
an RLF measurement;
a beam management measurement; or
an energy saving related measurement of the network-side device.

For example, the transmission occasion of the energy-saving signal may be associated with an SSB based RRM measurement timing configuration (SMTC) window configured in a current cell, or may be associated with a measurement gap.

The transmission occasion of the energy-saving signal being associated with an SMTC window configured in the serving cell may be:
the transmission occasion of the energy-saving signal has a particular offset value from a starting position or an end position of the SMTC window, where the offset value may be a positive value or negative value, or may be 0; and
the transmission occasion of the energy-saving signal is associated with an SSB in the SMTC window, where an associated SSB is only in the SMTC window.

If a measurement gap is configured by the terminal, the transmission occasion of the energy-saving signal of the terminal may be associated with a measurement gap configured by the serving cell, and has a particular offset value from an end time of the measurement gap. The offset value may be a positive value or may be a negative value, and may be configured and indicated by the base station, or may be defined in a protocol, for example, a closest uplink slot after the measurement gap, or a specific uplink slot at a fixed time interval after the measurement gap.

The foregoing example is also applicable to at least one of first measurements such as the CSI measurement, the RLF measurement, the beam management measurement, the energy saving related measurement of the network-side device, and the like. When a cell is in different energy-saving states, the transmission occasion of the energy-saving signal may have an association relationship with different first measurements. For example, the energy-saving states of the cell may include three states, namely, a state 1, a state 2, and a state 3, which respectively correspond to the normal service state, a light sleep state, and a deep sleep state. When the cell is in the normal service state, the transmission occasion of the energy-saving signal has an association relationship with the CSI measurement or the SMTC window. When the cell is in the light sleep state, the transmission occasion of the energy-saving signal has an association relationship with the RLF measurement. When the cell is in the deep sleep state, the transmission occasion of the energy-saving signal has an association relationship with the RRM measurement. The foregoing example is only used for description, and does not specifically constitute a limitation.

It needs to be noted that each of the parameter of the reference signal, the parameter of the physical layer transmission resource, and the parameter of the first measurement included in the first parameter may have an association relationship in different energy-saving states of the cell. For example, the energy-saving states of the cell may include three states, namely, a state 1, a state 2, and a state 3, which respectively correspond to the normal service state, a light sleep state, and a deep sleep state. The transmission occasion of the energy-saving signal in the state 1 has an association relationship with the parameter of the physical layer transmission resource; the transmission occasion of the energy-saving signal in the state 2 has an association relationship with the parameter of the first measurement; the transmission occasion of the energy-saving signal in the state 3 has an association relationship with the parameter of the reference signal; and the like. This is not specifically limited herein.

In an optional embodiment, the step 202 includes:
determining, by the terminal according to the first parameter and the association relationship between the information of the resource occupied by the transmission occasion and the first parameter, the information of the resource occupied by the transmission occasion of the energy-saving signal.

In an optional embodiment of the present disclosure, the information of the resource occupied by the transmission occasion includes at least one of:
time domain resource information;
frequency domain resource information;
spatial domain resource information; or
code domain resource information.

For example, the code domain resource information includes an encoding scheme, an encoding format, and the like of the energy-saving signal, and is not specifically limited herein.

In an optional embodiment, the method further includes:
determining, according to the time domain resource information, at least one of periodic related information of a time domain resource in which the transmission occasion is located, semi-persistent related information of the time domain resource, or aperiodic related information of the time domain resource in one periodicity.

For example, the energy-saving signal may be a periodic signal, and the time domain resource includes at least one of: a periodicity, a frame number/subframe/slot/symbol number, a quantity of transmission occasions or transmission occasion sets in one periodicity/subframe/slot, gaps between transmission occasions and/or transmission occasion sets, a starting time position, a duration, and an end time position. The transmission occasion set includes one or more transmission occasions.

In another optional embodiment, the method further includes:
determining, according to the frequency domain resource information, at least one of an active BWP occupied by a frequency domain resource in which the transmission occasion is located, related information of a specific band occupied by the frequency domain resource, or related information of an initial BWP occupied by the frequency domain resource.

The specific band is a frequency domain resource with a frequency domain resource element as a granularity, and includes at least one of parameters such as a subcarrier spacing in which the energy-saving signal is located, a frequency domain bandwidth, a quantity of frequency domain resource elements, a starting position of a frequency domain resource, an end position of a frequency domain resource, a frequency domain transmission occasion, a gap between transmission occasion sets, and/or the like.

The frequency domain resource includes uplink and/or downlink frequency domain resources. For example, the initial BWP includes an uplink initial BWP and/or a downlink initial BWP, and is not specifically limited herein.

The specific band further includes at least one of: a specific BWP, a specific carrier, a specific frequency, and the like.

For example, the specific BWP may be any one or more BWPs configured in a carrier in which a primary serving cell or a serving cell or a PCell or an SCell is located. The specific carrier may be any one or more carriers in carrier aggregation, for example, a carrier in which a PCell is located and/or a carrier in which at least one SCell is located, or may be at least one carrier of carriers supported by the terminal. The specific frequency may be any frequency supported by the terminal, or may be any frequency in a frequency range 1 (FR1) or a frequency range 2 (FR2), or may be any frequency in LTE or 5G frequencies. The specific frequency is notified to the terminal in at least one manner of being configured through broadcast signaling or higher layer signaling, or being predetermined, or being indicated in dynamic signaling.

In still another optional embodiment, the method further includes:
determining beam information corresponding to the transmission occasion according to the spatial domain resource information, where the beam information is explicitly indicated or implicitly indicated in the spatial domain resource information.

Optionally, the beam information is specifically a transmission configuration indicator (TCI). For example, the parameters such as the TCI are explicitly indicated in the first information. Alternatively, the parameters such as the TCI are implicitly indicated in the first information, for example, are associated with the SSB and/or the CSI-RS, i.e., a transmission beam of the energy-saving signal is consistent with a transmission beam of the SSB and/or the CSI-RS.

In at least one embodiment of the present disclosure, an obtaining manner of the first information includes:
receiving second information transmitted by the network-side device; and/or obtaining third information pre-defined or configured in advance,
where the first information includes the second information and/or the third information.

In other words, the second information includes part or all of the first information, and the third information includes part or all of the first information. In other words, the terminal may obtain all content of the first information from the network side, or may obtain all content of the first information in a manner of being pre-defined or configured in advance, or partial content of the first information may be obtained from the network side and the other partial content of the first information is obtained in a manner of being pre-defined or configured in advance.

In an optional embodiment, the third information includes a candidate resource set of transmission occasions pre-defined or configured in advance; and
the second information further includes: indication information transmitted by the network-side device, where the indication information is used for indicating at least one transmission occasion corresponding to the candidate resource set.

In at least one embodiment of the present disclosure, receiving the second information of the network-side device includes:
receiving, through first signaling, the second information transmitted by the network-side device, where the first signaling includes at least one of:
broadcast signaling;
common signaling; or
terminal specific signaling.

For example, the network-side device configures, for some terminals or terminal groups or all terminals through the first signaling, second information for a terminal side to determine a transmission occasion of transmitting the energy-saving signal.

In still another optional embodiment of the present disclosure, the method further includes:
transmitting, by the terminal, the energy-saving signal on any transmission occasion;
   or
transmitting, by the terminal, the energy-saving signal on every transmission occasion;
   or
transmitting, by the terminal, the energy-saving signal on at least one subset of a transmission occasion set;
   or
transmitting, by the terminal, the energy-saving signal on a transmission occasion when a specific condition is met. For example, the specific condition is a solution for resolving a conflict between the energy-saving signal and the reference signal or a physical layer channel.

In an optional embodiment, in a scenario in which a network needs to distinguish which terminal an energy-saving signal is from, a plurality of terminals transmit energy-saving signals on different transmission occasions, where the transmission occasions of the energy-saving signals determined by the plurality of terminals respectively meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

In another optional embodiment, a plurality of terminals transmit energy-saving signals on a same transmission occasion. For example, in a scenario in which a network does not need to distinguish which terminal an energy-saving signal is from or in a case that a plurality of terminals can be distinguished through auto-correlation of energy-saving signals of the terminals, the plurality of terminals may transmit energy-saving signals on a same transmission occasion.

In summary, in the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

As shown in Fig. 3, the present disclosure further provides in some embodiments a configuration method of a transmission occasion of an energy-saving signal, performed by a network-side device, the method including the following step 301.

The step 301 includes: transmitting second information to a terminal, where the second information is used for the terminal to determine the transmission occasion of the energy-saving signal, and the energy-saving signal is used for assisting in or triggering an energy-saving-related operation of the network-side device.

Optionally, the transmission occasion of the energy-saving signal is used for the terminal to transmit the energy-saving signal and/or for the network-side device to monitor the energy-saving signal.

The method further includes:
performing a corresponding energy-saving-related operation according to a detected energy-saving signal, where the energy-saving-related operation includes at least one of:
waking up a sleeping cell; or
triggering the network-side device to perform state switching between an energy-saving state and a non-energy-saving state. The non-energy-saving state may also be referred to as an operating state, a normal state, or the like, and is not specifically limited herein.

"The network-side device being in an energy-saving state" may be understood as that the network-side device is turned off or sleeps.

It needs to be noted that the "energy-saving signal" mentioned in the embodiments of the present disclosure may also be referred to as an energy-saving signal or energy-saving signaling or a message used for energy saving, and is not specifically limited herein.

In the embodiments of the present disclosure, the terminal needs to determine the transmission occasion of the energy-saving signal according to the obtained first information, and a manner of obtaining the first information by the terminal includes:
receiving second information transmitted by the network-side device; and/or obtaining third information pre-defined or configured in advance,
where the first information includes the second information and/or the third information.

In other words, the second information includes part or all of the first information, and the third information includes part or all of the first information. In other words, the terminal may obtain all content of the first information from the network side, or may obtain all content of the first information in a manner of being pre-defined or configured in advance, or partial content of the first information may be obtained from the network side and the other partial content of the first information is obtained in a manner of being pre-defined or configured in advance.

In at least one embodiment of the present disclosure, the second information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

In other words, in the embodiments of the present disclosure, the transmission occasion of the energy-saving signal is separately configured through the first resource information, or may have an association relationship with the first parameter and may be configured through the second resource information.

The first parameter includes at least one of:
a parameter of a reference signal;
a parameter of a physical layer transmission resource; or
a parameter of a first measurement.

In other words, the transmission occasion of the energy-saving signal is associated with the reference signal and/or the physical layer transmission resource and/or the first measurement, and the terminal determines, according to a related parameter (i.e., the first parameter) of the reference signal and/or the physical layer transmission resource and/or the first measurement and the association relationship, the information of the resource occupied by the transmission occasion.

In an optional embodiment, the first parameter is: the parameter of a serving cell of the terminal, or, the parameter of a neighboring cell of the terminal.

For example, the reference signal is a reference signal transmitted by the serving cell or a reference signal transmitted by the neighboring cell. For another example, the physical layer transmission resource is a physical layer transmission resource of the serving cell or a physical layer transmission resource of the neighboring cell. For still another example, the first measurement is a first measurement of the serving cell or a first measurement of the neighboring cell. The serving cell may be a current serving cell, or may be a PCell in an MCG, or may be a PSCell in an SCG, or may be an SpCell, or may be an SCell. The neighboring cell may be a neighboring cell in an energy-saving state, or may be a small cell within a coverage area of the serving cell or a neighboring cell having an overlapping coverage area, or may be an SCell in a carrier aggregation scenario, or may be a neighboring cell in a homogeneous network, or may be any cell in MR-DC.

It needs to be further noted that the neighboring cell mentioned in the embodiments of the present disclosure is mainly a cell in an energy-saving state, and may be a cell that is different from or the same as the serving cell, which is not limited in this solution.

In an optional embodiment of the present disclosure, the reference signal includes at least one of:
an SS/PBCH block SSB;
an SSB burst set;
a reference signal for energy saving of the network-side device; where the reference signal for energy saving of the network-side device may be an existing reference signal with a specific transmission pattern when the base station is in an energy-saving state, or may be a newly added reference signal, and optionally, the reference signal may be referred to as a DRS;
a CSI-RS;
a TRS;
a PRS; or
an SRS.

For example, an example in which the energy-saving signal is associated with an SSB/SSB burst set transmitted by the serving cell is used for description.

Periodic related information of a time domain resource, for example, a periodicity, in which the transmission occasion of the energy-saving signal is located has a particular association with the SSB burst set. The periodicity of the transmission occasion of the energy-saving signal is K1 times or one K1^{th} of an SSB burst periodicity, where K1 is an integer greater than or equal to 1. When the periodicity of the transmission occasion is K1 times of the SSB burst periodicity, it means that the periodicity of the transmission occasion is specifically shown in Fig. 6.

A time domain position of the transmission occasion or a transmission occasion set of the energy-saving signal in one periodicity is associated with a specific SSB burst or a specific SSB or a specific SSB set. A specific example of an association relationship is as follows:

the transmission occasion or a specific (for example, the first/the last/an n^{th}) transmission occasion in the transmission occasion set has a particular offset value from a target SSB. The transmission occasion may be located before the target SSB or may be located after the target SSB. Sequential positions may be represented through the positive and negative values of the offset value. For example, the offset value being positive represents that the transmission occasion is located after the SSB, and in contrast, the offset value being negative represents that the transmission occasion is located before the SSB. The target SSB may be any one of a specific SSB burst or a specific SSB or a specific SSB set, and may be configured or indicated through at least one of broadcast signaling, higher layer signaling, or MAC layer signaling. The target SSB may be a numbered or k^{th} SSB or SSB burst in a specific radio frame, or may be a numbered or k^{th} SSB or SSB burst in the periodicity of the transmission occasion.

A plurality of transmission occasions or transmission occasion sets may be associated with a same SSB burst or SSB, or may be associated with different SSB bursts or SSBs, which may be specifically configured or indicated through at least one of broadcast signaling, higher layer signaling, or MAC layer signaling.

For another example, the transmission occasion of the energy-saving signal may have an association relationship with a reference signal, for example, an SSB, a reference signal for energy saving of the network-side device, or the like, transmitted by the neighboring cell. The reference signal for energy saving of the network-side device may be an existing reference signal with a specific transmission pattern when the base station is in an energy-saving state, or may be a newly added reference signal, which is not limited in this solution. The transmission occasion of the energy-saving signal may have an association relationship with an SSB transmitted by the neighboring cell. The reference signal transmitted by the neighboring cell may be configured by the serving cell, or may be configured by the neighboring cell, or may be prestored by the terminal, or may be obtained through blind monitoring by the terminal. The neighboring cell may be a neighboring cell in an energy-saving state, or may be a neighboring cell in a normal service state.

When the terminal learns related information of the reference signal of the neighboring cell, the terminal determines the transmission occasion of the energy-saving signal based on the reference signal of the neighboring cell. For example, details are as follows:

when the terminal learns a configuration that is transmitted by the neighboring cell and is of the parameter of the reference signal for energy saving of the network-side device, the terminal further learns an association relationship between the energy-saving signal and the reference signal for energy saving of the network-side device, so that the transmission occasion of the energy-saving signal can be further obtained.

The association relationship between the transmission occasion of the energy-saving signal and the reference signal for energy saving of the network-side device has at least one of:
the transmission occasion has a particular offset value from a starting position or an ending position of the reference signal for energy saving of the network-side device, where the offset value may be a positive value or may be a negative value, i.e., may be located after the reference signal for energy saving of the network-side device or may be located before the reference signal for energy saving of the network-side device; or
the transmission occasion has a particular offset value from a time domain position of the last reference signal for energy saving of the network-side device in a periodicity of the reference signal for energy saving of the network-side device.

The transmission occasion has a particular offset value from a specific reference signal for energy saving of the network-side device in the periodicity of the reference signal for energy saving of the network-side device. The offset value may be a positive value, may be a negative value, or may be a zero value or a default value, i.e., may be located after the specific reference signal for energy saving of the network-side device or may be located before the specific reference signal for energy saving of the network-side device. The transmission occasion may be a specific transmission occasion or the first transmission occasion or the last transmission occasion in the transmission occasion set of the energy-saving signal, or may be a specific symbol or a specific slot in the transmission occasion.

The foregoing example is also applicable to at least one of reference signals such as the reference signal for energy saving of the network-side device, the CSI-RS, the TRS, the PRS, the SRS, and the like. When a cell is in different energy-saving states, the transmission occasion of the energy-saving signal may have an association relationship with different reference signals. For example, the energy-saving states of the cell may include three states, namely, a state 1, a state 2, and a state 3, which respectively correspond to the normal service state, a light sleep state, and a deep sleep state. When the cell is in the normal service state, the transmission occasion of the energy-saving signal has an association relationship with the CSI-RS. When the cell is in the light sleep state, the transmission occasion of the energy-saving signal has an association relationship with the TRS. When the cell is in the deep sleep state, the transmission occasion of the energy-saving signal has an association relationship with the SSB. The foregoing example is only used for description, and does not specifically constitute a limitation.

In another optional embodiment of the present disclosure, the physical layer transmission resource includes at least one of:
an RO;
a scheduling request occasion;
a PDCCH monitoring occasion;
a PUCCH transmission occasion; or
a physical layer shared channel, including a PDSCH and/or a PUSCH.

For example, an example in which the energy-saving signal is associated with the RO configured by the serving cell for the terminal is used for description.

The transmission occasion of the energy-saving signal may be associated with the RO configured by the serving cell for the terminal. The periodicity of the transmission occasion of the energy-saving signal may be N times or 1/N of a PRACH periodicity, where N is an integer greater than or equal to 1. The transmission occasion or the transmission occasion set of the energy-saving signal is associated with a specific PRACH periodicity, and the periodicity of the transmission occasion of the energy-saving signal may be determined according to a system frame number index of the specific PRACH periodicity. The specific PRACH periodicity may be configured or indicated through broadcast signaling and/or higher layer signaling.

For another example, the transmission occasion of the energy-saving signal has a particular offset value from a specific RO of the terminal. The offset value may be a positive value, may be a negative value, or may be a zero value or a default value. The transmission occasion of the energy-saving signal may be located in a same slot as the RO, or may be located in an uplink slot other than the slot in which the RO is located. The offset value may be an offset value in time domain, or may be an offset value in frequency domain. The transmission occasion may be a specific transmission occasion or the first transmission occasion or the last transmission occasion in the transmission occasion set of the energy-saving signal, or may be a specific symbol or a specific slot in the transmission occasion. The specific RO may be a specific symbol in the specific RO or a specific symbol of a slot in which the specific RO is located, for example, the first symbol, or a specific value configured and indicated by the base station, or a specific position defined in a protocol. The offset value in frequency domain may be a difference between a frequency domain starting position or a frequency domain end position of the transmission occasion and a specific frequency domain position, for example, a frequency domain starting position, ending position, or the like, of the specific RO. The offset value in frequency domain may be a quantity of frequency domain resource elements. A specific value is configured and indicated by the base station or defined in a protocol. The transmission occasion of the energy-saving signal is associated with the RO, so that signaling overhead for configuring a parameter of the transmission occasion of the energy-saving signal on a base station side can be reduced. In addition, when the transmission occasion of the energy-saving signal is multiplexed with the RO, transmission resources of the Energy-saving signal can be reduced.

The foregoing example is also applicable to at least one of physical layer transmission resources such as the scheduling request occasion, the PDCCH monitoring occasion, the PUCCH transmission occasion, the physical layer shared channel, and the like. When a cell is in different energy-saving states, the transmission occasion of the energy-saving signal may have an association relationship with different physical layer transmission resources. For example, the energy-saving states of the cell may include three states, namely, a state 1, a state 2, and a state 3, which respectively correspond to the normal service state, a light sleep state, and a deep sleep state. When the cell is in the normal service state, the transmission occasion of the energy-saving signal has an association relationship with the PUSCH. When the cell is in the light sleep state, the transmission occasion of the energy-saving signal has an association relationship with the PUCCH. When the cell is in the deep sleep state, the transmission occasion of the energy-saving signal has an association relationship with the RO. The foregoing example is only used for description, and does not specifically constitute a limitation.

Optionally, the transmission occasion of the energy-saving signal may be a subset or a universal set of an RO set.

In an optional embodiment, on the specific RO, behavior of transmitting a signal by the terminal includes any one in the following:
transmitting, by the terminal, an energy-saving signal or a preamble, which may be based on a configured priority, or may be based on a priority under a specific condition, or may be based on a pre-defined priority; and
transmitting, by the terminal, an energy-saving signal and a preamble, which may be distinguished by the base station based on configured different signals.

In still another optional embodiment of the present disclosure, the first measurement includes at least one of:
an RRM measurement;
a CSI measurement;
an RLF measurement;
a beam management measurement; or
an energy saving related measurement of the network-side device.

For example, the transmission occasion of the energy-saving signal may be associated with an SMTC window configured in a current cell, or may be associated with a measurement gap.

The transmission occasion of the energy-saving signal being associated with an SMTC window configured in the serving cell may be:
the transmission occasion of the energy-saving signal has a particular offset value from a starting position or an end position of the SMTC window, where the offset value may be a positive value or negative value, or may be 0; and
the transmission occasion of the energy-saving signal is associated with an SSB in the SMTC window, where an associated SSB is only in the SMTC window.

If a measurement gap is configured by the terminal, the transmission occasion of the energy-saving signal of the terminal may be associated with a measurement gap configured by the serving cell, and has a particular offset value from an end time of the measurement gap. The offset value may be a positive value or may be a negative value, and may be configured and indicated by the base station, or may be defined in a protocol, for example, a closest uplink slot after the measurement gap, or a specific uplink slot at a fixed time interval after the measurement gap.

The foregoing example is also applicable to at least one of first measurements such as the CSI measurement, the RLF measurement, the beam management measurement, the energy saving related measurement of the network-side device, and the like. When a cell is in different energy-saving states, the transmission occasion of the energy-saving signal may have an association relationship with different first measurements. For example, the energy-saving states of the cell may include three states, namely, a state 1, a state 2, and a state 3, which respectively correspond to the normal service state, a light sleep state, and a deep sleep state. When the cell is in the normal service state, the transmission occasion of the energy-saving signal has an association relationship with the CSI measurement or the SMTC window. When the cell is in the light sleep state, the transmission occasion of the energy-saving signal has an association relationship with the RLF measurement. When the cell is in the deep sleep state, the transmission occasion of the energy-saving signal has an association relationship with the RRM measurement. The foregoing example is only used for description, and does not specifically constitute a limitation.

It needs to be noted that each of the parameter of the reference signal, the parameter of the physical layer transmission resource, and the parameter of the first measurement included in the first parameter may have an association relationship in different energy-saving states of the cell. For example, the energy-saving states of the cell may include three states, namely, a state 1, a state 2, and a state 3, which respectively correspond to the normal service state, a light sleep state, and a deep sleep state. The transmission occasion of the energy-saving signal in the state 1 has an association relationship with the parameter of the physical layer transmission resource; the transmission occasion of the energy-saving signal in the state 2 has an association relationship with the parameter of the first measurement; the transmission occasion of the energy-saving signal in the state 3 has an association relationship with the parameter of the reference signal; and the like. This is not specifically limited herein.

In an optional embodiment of the present disclosure, the information of the resource occupied by the transmission occasion includes at least one of:
time domain resource information;
frequency domain resource information;
spatial domain resource information; or
code domain resource information.

For example, the code domain resource information includes an encoding scheme, an encoding format, and the like of the energy-saving signal, and is not specifically limited herein.

In an optional embodiment, the time domain resource information includes at least one of:
periodic related information of a time domain resource;
semi-persistent related information of the time domain resource; or
aperiodic related information of the time domain resource in one periodicity.

For example, the energy-saving signal may be a periodic signal, and the time domain resource includes at least one of: a periodicity, a frame number/subframe/slot/symbol number, a quantity of transmission occasions or transmission occasion sets in one periodicity/subframe/slot, gaps between transmission occasions and/or transmission occasion sets, a starting time position, a duration, and an end time position. The transmission occasion set includes one or more transmission occasions.

In another optional embodiment, the frequency domain resource information includes at least one of:
related information of an active BWP occupied by a frequency domain resource;
related information of a specific band occupied by the frequency domain resource; or
related information of an initial BWP occupied by the frequency domain resource.

The specific band is a frequency domain resource with a frequency domain resource element as a granularity, and includes at least one of parameters such as a subcarrier spacing in which the energy-saving signal is located, a frequency domain bandwidth, a quantity of frequency domain resource elements, a starting position of a frequency domain resource, an end position of a frequency domain resource, a frequency domain transmission occasion, a gap between transmission occasion sets, and/or the like.

The frequency domain resource includes uplink and/or downlink frequency domain resources. For example, the initial BWP includes an uplink initial BWP and/or a downlink initial BWP, and is not specifically limited herein.

The specific band further includes at least one of: a specific BWP, a specific carrier, a specific frequency, and the like.

For example, the specific BWP may be any one or more BWPs configured in a carrier in which a primary serving cell or a serving cell or a PCell or an SCell is located. The specific carrier may be any one or more carriers in carrier aggregation, for example, a carrier in which a PCell is located and/or a carrier in which at least one SCell is located, or may be at least one carrier of carriers supported by the terminal. The specific frequency may be any frequency supported by the terminal, or may be any frequency in an FR1 or an FR2, or may be any frequency in LTE or 5G frequencies. The specific frequency is notified to the terminal in at least one manner of being configured through broadcast signaling or higher layer signaling, or being predetermined, or being indicated in dynamic signaling.

In still another optional embodiment, the spatial domain resource information includes at least one of:
explicitly indicated beam information; or
implicitly indicated beam information.

Optionally, the beam information is specifically a TCI. For example, the parameters such as the TCI are explicitly indicated in the first information. Alternatively, the parameters such as the TCI are implicitly indicated in the first information, for example, are associated with the SSB and/or the CSI-RS, i.e., a transmission beam of the energy-saving signal is consistent with a transmission beam of the SSB and/or the CSI-RS.

In at least one embodiment of the present disclosure, in a case that a candidate resource set of transmission occasions is pre-defined or configured in advance for the terminal, the second information further includes:
indication information, where the indication information is used for indicating at least one transmission occasion corresponding to a candidate resource set of transmission occasions pre-defined or configured in advance.

In at least one embodiment of the present disclosure, the step 301 includes:
transmitting, by the network-side device, the second information to the terminal through first signaling, where the first signaling includes at least one of:
broadcast signaling;
common signaling; or
terminal specific signaling.

For example, the network-side device configures, for some terminals or terminal groups or all terminals through the first signaling, second information for a terminal side to determine a transmission occasion of transmitting the energy-saving signal.

In still another optional embodiment of the present disclosure, the method further includes:
performing, by the network-side device, energy-saving signal monitoring on every preconfigured transmission occasion;
   or
performing, by the network-side device, energy-saving signal monitoring on a pre-defined transmission occasion;
   or
performing, by the network-side device, energy-saving signal monitoring on at least one subset of a transmission occasion set;
   or
performing, by the network-side device, energy-saving signal monitoring on a transmission occasion when a specific condition is met. For example, the specific condition is a solution for resolving a conflict between the energy-saving signal and the reference signal or a physical layer channel.

In an optional embodiment, in a scenario in which a network needs to distinguish which terminal an energy-saving signal is from, a plurality of terminals transmit energy-saving signals on different transmission occasions, where the transmission occasions of the energy-saving signals configured for the plurality of terminals meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

In another optional embodiment, a plurality of terminals transmit energy-saving signals on a same transmission occasion. For example, in a scenario in which a network does not need to distinguish which terminal an energy-saving signal is from or in a case that a plurality of terminals can be distinguished through auto-correlation of energy-saving signals of the terminals, the plurality of terminals may transmit energy-saving signals on a same transmission occasion.

In summary, in the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

For clearer descriptions of the method for transmitting an energy-saving signal and the configuration method of a transmission occasion of an energy-saving signal provided in the embodiments of the present disclosure, descriptions are provided below with reference to several examples.

### Example 1

Time domain resource information of a transmission occasion of an energy-saving signal includes:
the energy-saving signal may be a periodic signal, and the time domain resource information includes at least one of parameters such as a periodicity, a frame number/subframe/slot/symbol number, a quantity of transmission occasions or transmission occasion sets in one periodicity/subframe/slot, gaps between transmission occasions and/or transmission occasion sets, a starting time position, a duration, an end time position, and the like.

Optionally, at least one transmission occasion may be configured for the energy-saving signal of one terminal within one periodicity, and a duration of one transmission occasion may correspond to one time domain unit, for example, a subframe/slot/time span/symbol, or may correspond to a plurality of time domain units, for example, M subframes/slots/symbols/seconds/milliseconds, where M is greater than or equal to 1. The plurality of time domain units may be consecutive, or may be nonconsecutive. When nonconsecutive time domain units 2 of consecutive time domain units 1 are used for one group of transmission occasions, for example, M consecutive slots are occupied, and each slot has K symbols. This is referred to as a transmission occasion set.

Optionally, at least one transmission occasion may be configured for the energy-saving signal of one terminal within a specific time window of one periodicity, or the terminal may transmit the energy-saving signal within a time window of one periodicity. A related parameter of the time window may be obtained in at least one manner in the following: configured through broadcast signaling or higher layer signaling, or pre-defined, or started and/or ended under a specific condition, for example, started and/or ended when a base station is in an energy-saving state or under a specific indication, for example, started when the terminal receives a specific energy saving indication from a network side or when a specific timer is started, and/or, ended when the specific timer expires or is interrupted. The related parameter of the time window includes at least one of the following parameters: a starting position, an ending position, a duration, and the like of the time window.

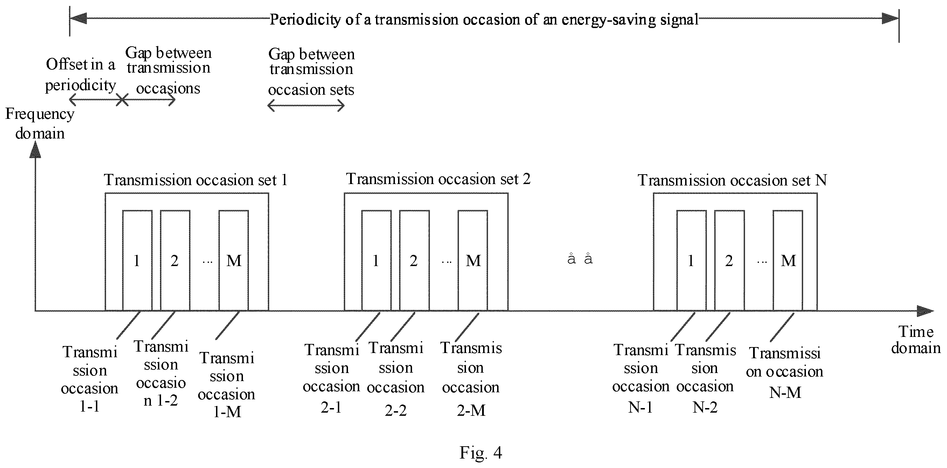

A specific schematic diagram of transmission occasions within one periodicity is shown in Fig. 4, and examples of cases that may exist are as follows:
at least one transmission occasion corresponds to different transmission beams, for example, transmission occasions 1-1, 1-2, ..., 1-M corresponding to different beams respectively correspond to beams 1 to M;
N transmission occasions correspond to a same beam, for example, transmission occasions 1-1, 2-1, ..., N-1 correspond to a beam 1, where on the N transmission occasions, a same energy-saving signal may be repetitively transmitted or different energy-saving signals may be transmitted;
different transmission occasion sets correspond to different neighboring cells, for example, a transmission occasion set 1 corresponds to a neighboring cell 1, a transmission occasion set 2 corresponds to a neighboring cell 2, ..., and a transmission occasion set N corresponds to a neighboring cell N; and
the time domain resource information of the transmission occasion of the energy-saving signal may be directly obtained through first information or second information or third information, for example, according to a periodicity, an offset value in a periodicity of a transmission occasion, a quantity M of transmission occasions in one periodicity, a quantity N of transmission occasion sets in one periodicity, and gaps between transmission occasions and/or transmission occasion sets. M and N are integers greater than or equal to 0. When M and N are configured as 0, it indicates that a transmission occasion of an energy-saving signal is not configured in the periodicity, or the parameter may be defaulted to indicate that there is no transmission occasion of an energy-saving signal.

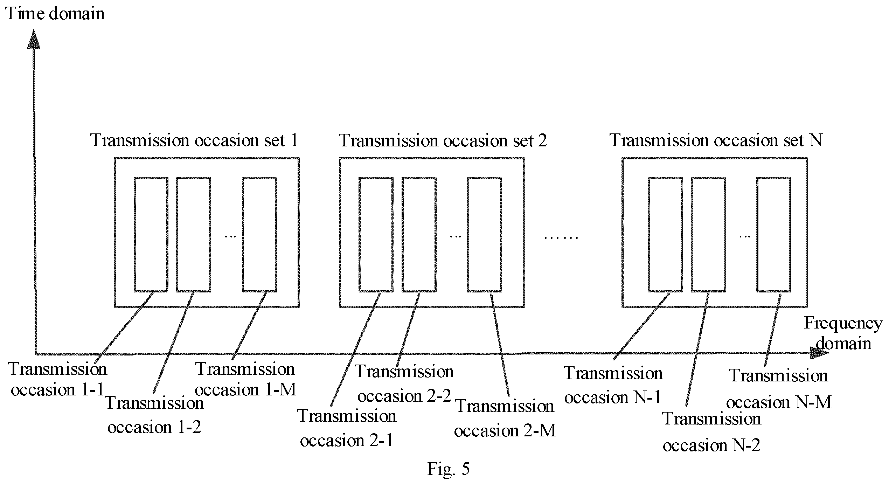

Frequency domain resource information of a transmission occasion of an energy-saving signal includes:
at least one of parameters such as a subcarrier spacing in which the energy-saving signal is located, a frequency domain bandwidth, a quantity of frequency domain resource elements, a starting position of a frequency domain resource, an end position of a frequency domain resource, a frequency domain transmission occasion, a gap between transmission occasion sets, and/or the like; and
at least one of related information of an occupied active BWP, related information of an occupied specific band, or related information of an initial BWP occupied by the frequency domain resource in which the transmission occasion of the energy-saving signal is located. The specific band includes: a specific BWP, a specific carrier, a specific frequency, and the like. The specific band is a frequency domain resource with a frequency domain resource element as a granularity. The related information of the specific band includes: at least one of a starting position, a quantity of frequency domain resource elements, or an ending position. For example, a specific schematic diagram of transmission occasions within one periodicity is shown in Fig. 5, and examples of cases that may exist are as follows:
   at least one transmission occasion corresponds to different transmission beams, for example, transmission occasions 1-1, 1-2, ..., 1-M corresponding to different beams respectively correspond to beams 1 to M;
   N transmission occasions correspond to a same beam, for example, transmission occasions 1-1, 2-1, ..., N-1 correspond to a beam 1, where on the N transmission occasions, same wake-up information may be repetitively transmitted or different energy-saving signals may be transmitted; and
   different transmission occasion sets correspond to different neighboring cells, for example, a transmission occasion set 1 corresponds to a neighboring cell 1, a transmission occasion set 2 corresponds to a neighboring cell 2, ..., and a transmission occasion set N corresponds to a neighboring cell N.

Spatial domain resource information of the energy-saving signal includes:
a beam indication of the energy-saving signal transmission, which may explicitly indicate parameters such as a TCI, or may implicitly indicate parameters such as a TCI, which, for example, may be associated with an SSB and/or a CSI-RS, and beam information of the parameters such as a TCI is consistent with that of the SSB and/or the CSI-RS.

For the explicit indication of the beam information of transmission occasion of the energy-saving signal, different transmission occasions may be indicated based on broadcast signaling, higher layer signaling, or MAC layer signaling. For example, a beam indication set {TCI#1, ..., TCI#N} of the transmission occasion set may be specifically indicated.

For the implicit indication of beam information of the transmission occasion of the energy-saving signal, for example, the transmission occasion of the energy-saving signal may be associated with an SSB or SSB burst, the energy-saving signal is transmitted based on an SSB transmitted on different beams, and the base station may learn beams transmitted by UE. An SSB burst transmitted by the base station has a total of N beams, which respectively correspond to N transmission occasions of the terminal, and one energy-saving signal is generated on every transmission occasion of the terminal. When detecting an energy-saving signal on a specific transmission occasion, the base station may learn beam information of both the terminal and the base station. For details of association with an SSB, further refer to Example 2.

After the terminal receives the transmission occasion of the energy-saving signal configured by the base station, the terminal performs the following operations:
the energy-saving signal may be transmitted on every transmission occasion;
the energy-saving signal may be transmitted on a transmission occasion according to a particular transmission condition, i.e., the energy-saving signal is transmitted only when the particular transmission condition is met, or otherwise, the terminal does not transmit the energy-saving signal; and
the energy-saving signal may be transmitted on a subset of a configured transmission occasion set.

The base station performs energy-saving signal monitoring on the transmission occasion of the energy-saving signal:
the energy-saving signal monitoring may be performed on every transmission occasion;
the energy-saving signal monitoring may be performed on a specific transmission occasion; and
the energy-saving signal monitoring may be performed on a subset of a configured transmission occasion set according to a particular algorithm.

For example, when receiving no energy-saving signal transmitted by the terminal, the base station may perform monitoring on every transmission occasion. When detecting an energy-saving signal, the base station learns transmission and reception beams of the terminal, and the base station may perform energy-saving signal monitoring on corresponding beams within a period of time. It may be determined, according to an algorithm inside the base station, to perform energy-saving signal monitoring on a configured transmission occasion set, to reduce energy-saving signal monitoring by the base station, thereby reducing unnecessary power consumption.

### Example 2

Time domain resource information of a transmission occasion of an energy-saving signal may be obtained by deducing an association relationship with a specific reference signal/channel/measurement. The specific reference signal/channel signal/measurement may be transmitted by a serving cell or may be transmitted by a neighboring cell. In this example, an example in which the energy-saving signal is associated with an SSB/SSB burst set transmitted by the serving cell is used for description.

The transmission occasion of the energy-saving signal has a particular association with a periodicity of the SSB burst set, and is K times or one K^{th} of the SSB burst set, where K is an integer greater than or equal to 1. When a periodicity of the transmission occasion is K times of an SSB burst periodicity, it means that the periodicity of the transmission occasion is specifically shown in Fig. 6.

A time domain position of the transmission occasion or a transmission occasion set of the energy-saving signal in one periodicity is associated with a specific SSB burst or a specific SSB or a specific SSB set. A specific example of an association relationship is as follows:
the transmission occasion or a specific (for example, the first/the last/an n^{th}) transmission occasion in the transmission occasion set has a particular offset value from a target SSB. The transmission occasion may be located before the target SSB or may be located after the target SSB. Sequential positions may be represented through the positive and negative values of the offset value. For example, the offset value being positive represents that the transmission occasion is located after the SSB, and in contrast, the offset value being negative represents that the transmission occasion is located before the SSB. The target SSB may be any one of a specific SSB burst or a specific SSB or a specific SSB set, and may be configured or indicated through at least one of broadcast signaling, higher layer signaling, or MAC layer signaling. The target SSB may be a numbered or k^{th} SSB or SSB burst in a specific radio frame, or may be a numbered or k^{th} SSB or SSB burst in the periodicity of the transmission occasion.

A plurality of transmission occasions or transmission occasion sets may be associated with a same SSB burst or SSB, or may be associated with different SSB bursts or SSBs, which may be specifically configured or indicated through at least one of broadcast signaling, higher layer signaling, or MAC layer signaling.

After a terminal receives the transmission occasion of the energy-saving signal configured by a base station, the terminal performs the following operations:
the energy-saving signal may be transmitted on every transmission occasion;
the energy-saving signal may be transmitted on a transmission occasion according to a particular transmission condition, i.e., the energy-saving signal is transmitted only when the particular transmission condition is met, or otherwise, the terminal does not transmit the energy-saving signal; and
the energy-saving signal may be transmitted on a subset of a configured transmission occasion set.

The base station performs energy-saving signal monitoring on the transmission occasion of the energy-saving signal:
the energy-saving signal monitoring may be performed on every transmission occasion;
the energy-saving signal monitoring may be performed on a specific transmission occasion; and
the energy-saving signal monitoring may be performed on a subset of a configured transmission occasion set according to a particular algorithm.

For example, when receiving no energy-saving signal transmitted by the terminal, the base station may perform monitoring on every transmission occasion. When detecting an energy-saving signal, the base station learns transmission and reception beams of the terminal, and the base station may perform energy-saving signal monitoring on corresponding beams within a period of time. It may be determined, according to an algorithm inside the base station, to perform energy-saving signal monitoring on a configured transmission occasion set, to reduce energy-saving signal monitoring by the base station, thereby reducing unnecessary power consumption.

In this example, the transmission occasion of the energy-saving signal is associated with the SSB, the terminal may perform downlink synchronization in the serving cell first and then transmit the energy-saving signal, so that reception performance of the energy-saving signal can be improved. In addition, a position of the SSB is consistently understood by all users in the serving cell, and a transmission position of an energy-saving signal by the terminal can be accurately obtained based on the SSB, making it convenient to transmit and receive the energy-saving signal.

This example is also applicable to that the transmission occasion of the energy-saving signal has an association relationship with reference signals such as a reference signal for energy saving of a network-side device, a CSI-RS, a TRS, a PRS, an SRS, and the like. Details are no longer described in this example. The reference signal for energy saving of the network-side device may be an existing reference signal with a specific transmission pattern when the base station is in an energy-saving state, or may be a newly added reference signal, which is not limited in this solution.

When the transmission occasion of the energy-saving signal has an association relationship with a reference signal/channel signal/measurement transmitted by the neighboring cell, a related configuration of the reference signal/channel signal/measurement transmitted by the neighboring cell may be notified to the terminal through the serving cell, or may be notified to the terminal by the neighboring cell through broadcast signaling.

### Example 3

The transmission occasion of the energy-saving signal may be associated with the RO configured by the serving cell for the terminal. The periodicity of the transmission occasion of the energy-saving signal may be N times or 1/N of a PRACH periodicity, where N is an integer greater than or equal to 1. The transmission occasion or the transmission occasion set of the energy-saving signal is associated with a specific PRACH periodicity, and the periodicity of the transmission occasion of the energy-saving signal may be determined according to a system frame number index of the specific PRACH periodicity. The specific PRACH periodicity may be configured or indicated through broadcast signaling and/or higher layer signaling.

N = 1 is used as an example for description in this embodiment, and several implementation methods are provided below:
The transmission occasion of the energy-saving signal is a subset or a universal set of an RO set of the terminal.

For example, when the terminal has been connected to a service, the terminal may transmit the energy-saving signal at a subset or universal set position of a configured RO set. The energy-saving signal is different from a preamble in a preamble set of random access, or may be a sequence in the set. The transmission occasion of the energy-saving signal being a subset or a universal set of an RO set may be configured by a base station or the terminal may indicate RO occupation. If the energy-saving signal and the preamble of random access are different sequences, the base station respectively monitors a preamble and an energy-saving signal on preconfigured ROs. If the energy-saving signal and the preamble of random access use a same sequence, an indication, i.e., RO occupation or preamble occupation, may be transmitted through the terminal.

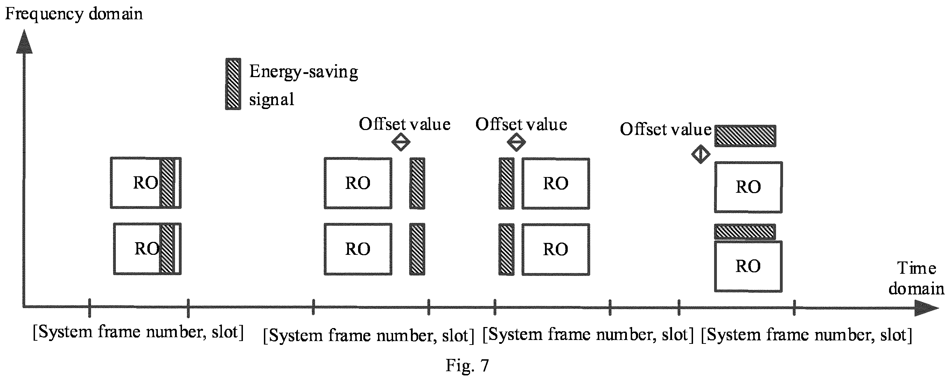

As shown in Fig. 7, the transmission occasion of the energy-saving signal has a particular offset value from a specific RO of the terminal. The offset value may be a positive value, may be a negative value, or may be a zero value or a default value. The transmission occasion of the energy-saving signal may be located in a same slot as the RO, or may be located in an uplink slot other than the slot in which the RO is located. The offset value may be an offset value in time domain, or may be an offset value in frequency domain. The transmission occasion may be a specific transmission occasion or the first transmission occasion or the last transmission occasion in the transmission occasion set of the energy-saving signal, or may be a specific symbol or a specific slot in the transmission occasion. The specific RO may be a specific symbol in the specific RO or a specific symbol of a slot in which the specific RO is located, for example, the first specific symbol, or a specific value configured and indicated by the base station, or a specific position defined in a protocol. The offset value in frequency domain may be a difference between a frequency domain starting position or a frequency domain end position of the transmission occasion and a specific frequency domain position, for example, a frequency domain starting position, ending position, or the like, of the specific RO. The offset value in frequency domain may be a quantity of frequency domain resource elements. A specific value is configured and indicated by the base station or defined in a protocol.

In this example, the transmission occasion of the energy-saving signal is associated with the RO, so that signaling overhead for configuring a parameter of the transmission occasion of the energy-saving signal on a base station side can be reduced. In addition, when the transmission occasion of the energy-saving signal is multiplexed with the RO, transmission resources of the Energy-saving signal can be reduced.

### Example 4

The energy-saving signal may be associated with an RRM measurement. The RRM measurement may be an RRM measurement of a current cell, or may be an RRM measurement of a neighboring cell. The transmission occasion of the energy-saving signal may be associated with an SMTC window configured in a current cell, or may be associated with a measurement gap.

The transmission occasion of the energy-saving signal being associated with an SMTC window configured in the serving cell may be:
the transmission occasion of the energy-saving signal has a particular offset value from a starting position or an end position of the SMTC window, where the offset value may be a positive value or negative value, or may be 0; and
the transmission occasion of the energy-saving signal is associated with an SSB in the SMTC window, where similar to Example 2, an associated SSB is only in the SMTC window.

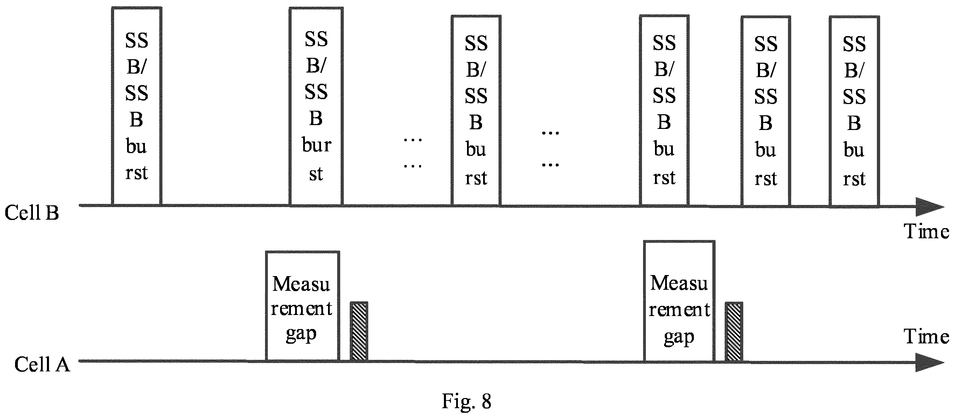

If a measurement gap is configured by the terminal, the transmission occasion of the energy-saving signal of the terminal may be associated with a measurement gap configured by the serving cell, and has a particular offset value from an end time of the measurement gap. The offset value may be a positive value or may be a negative value, and may be configured and indicated by the base station, or may be defined in a protocol, for example, a closest uplink slot after the measurement gap. Details are shown in Fig. 8.

The transmission occasion may be a specific transmission occasion or the first transmission occasion or the last transmission occasion in the transmission occasion set of the energy-saving signal, or may be a specific symbol or a specific slot in the transmission occasion.

In this example, when UE finishes the RRM measurement of the neighboring cell, it may be determined whether wake-up of the neighboring cell needs to be met.

The solution in this example is also applicable to a CSI measurement, an RLF measurement, a beam management measurement, and an energy saving related measurement of a network-side device. Details are no longer described in this example. The energy saving related measurement of the network-side device may be a specific existing measurement when the base station is in an energy-saving state, or may be a newly added measurement, which is not limited in this solution.

When the transmission occasion of the energy-saving signal has an association relationship with a reference signal/channel signal/measurement transmitted by the neighboring cell, a related configuration of the reference signal/channel signal/measurement transmitted by the neighboring cell may be notified to the terminal through the serving cell, or may be notified to the terminal by the neighboring cell through broadcast signaling.

### Example 5

The transmission occasion of the energy-saving signal may have an association relationship with a reference signal, for example, an SSB, a reference signal for energy saving of the network-side device, or the like, transmitted by the neighboring cell. The reference signal for energy saving of the network-side device may be an existing reference signal with a specific transmission pattern when the base station is in an energy-saving state, or may be a newly added reference signal, which is not limited in this solution. The transmission occasion of the energy-saving signal may have an association relationship with an SSB transmitted by the neighboring cell. Reference may be further made to Example 2. The SSB is an SSB transmitted by the neighboring cell. The reference signal transmitted by the neighboring cell may be configured by the serving cell, or may be configured by the neighboring cell, or may be prestored by the terminal, or may be obtained through blind monitoring by the terminal. How the terminal obtains the reference signal transmitted by the neighboring cell is not the focus of this solution.

When the terminal learns related information of the reference signal of the neighboring cell, the terminal determines the transmission occasion of the energy-saving signal based on the reference signal of the neighboring cell. For example, details are as follows:

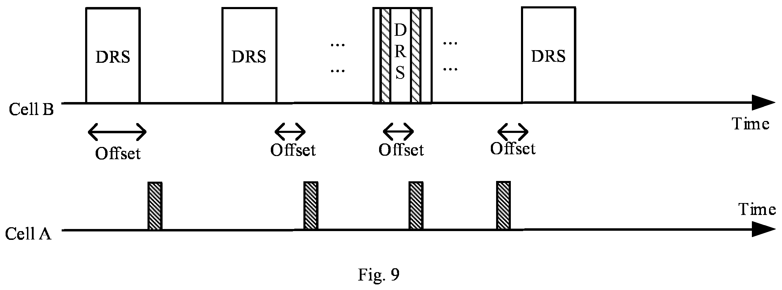

when the terminal learns a configuration that is transmitted by the neighboring cell and is of the parameter of the reference signal (for example, the DRS) for energy saving of the network-side device, the terminal further learns an association relationship between the energy-saving signal and the DRS, as shown in Fig. 9, so that the transmission occasion of the energy-saving signal can be further obtained.

The association relationship between the transmission occasion of the energy-saving signal and the DRS has at least one of:
the transmission occasion has a particular offset value from a starting position of the DRS. The offset value may be a positive value or may be a negative value, i.e., may be located after DRS or may be located before the DRS; or
the transmission occasion has a particular offset value from a time domain position of the last DRS in a periodicity of the DRS.

The transmission occasion has a particular offset value from a specific DRS in the periodicity of the DRS. The offset value may be a positive value, may be a negative value, or may be a zero value or a default value, i.e., may be located after the specific DRS or may be located before the specific DRS.

The transmission occasion may be a specific transmission occasion or the first transmission occasion or the last transmission occasion in the transmission occasion set of the energy-saving signal, or may be a specific symbol or a specific slot in the transmission occasion.

In this example, the energy-saving signal is associated with the DRS. In one aspect, it can be convenient for UE to perform energy saving reporting based on a DRS measurement. In another aspect, if the energy-saving signal is directly transmitted to a cell B (CellB), downlink synchronization may be first performed based on the DRS, and then the energy-saving signal is transmitted to CellB. Finally, the energy saving signal is transmitted before the DRS, and a subsequent DRS transmission pattern of CellB can be further indicated or modified or adjusted.

### Example 6

The base station may configure or agree on in a protocol in advance a candidate resource set of transmission occasions of an energy-saving signal, and indicate, through indication information (broadcast signaling and/or higher layer dedicated signaling and/or dynamic indication signaling), resource information in which the transmission occasions of the energy-saving signal are located. The candidate resource set may include at least one of a time domain configuration, a frequency domain configuration, a spatial domain configuration, a code domain configuration, and the like. The indication information may be an index value of the candidate resource set, or any one or more of the time domain configuration, the frequency domain configuration, the spatial domain configuration, and the code domain configuration, and the remaining items have an association relationship with indicated configuration information. As shown in Table 1:

**Table 1 Related information of a candidate resource set pre-defined or configured in advance**

| Index value | Time domain configuration | Frequency domain configuration | Spatial domain configuration | Code domain configuration |
|---|---|---|---|---|
| Index value 1 | Time domain configuration 1 | Frequency domain configuration 1 | Spatial domain configuration 1 | Code domain configuration 1 |
| Index value 2 | Time domain configuration 2 | Frequency domain configuration 2 | Spatial domain configuration 2 | Code domain configuration 2 |
| Index value 3 | Time domain configuration 3 | Frequency domain configuration 3 | Spatial domain configuration 3 | Code domain configuration 3 |
| ... | ... | ... | ... | ... |

### Example 7

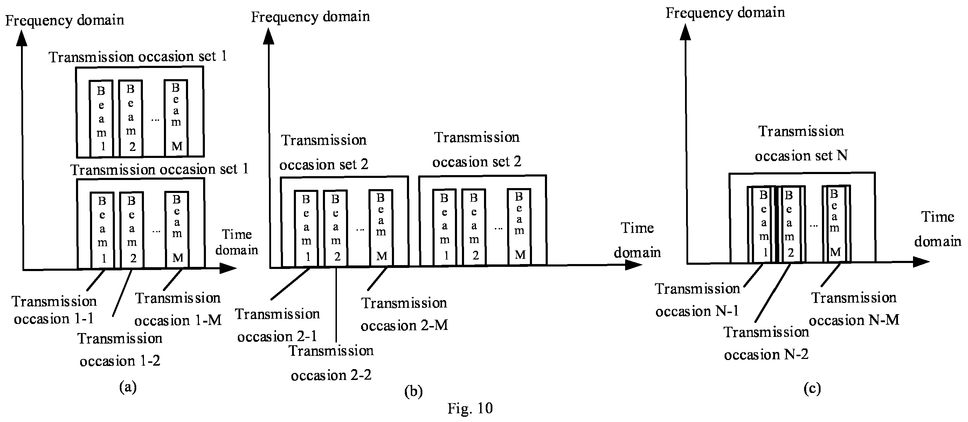

For transmission occasions among a plurality of users, (a) in Fig. 10 may be frequency division multiplexed, (b) in Fig. 10 may be time division multiplexed, (c) in Fig. 10 may be code division multiplexed, or any two or three of the three manners may coexist. For example:

For a plurality of users with frequency division multiplexing, different users may be distributed to different frequency domain resources. The base station may determine different users according to energy-saving signals detected on transmission occasions in different frequency domains.

For a plurality of users with time division multiplexing, different users may be distributed to different time domain resources. The base station may determine different users according to energy-saving signals detected on transmission occasions in different time domains.

For a plurality of users with code division multiplexing, i.e., on a same time domain resource, for example, transmission occasion sets configured for UE1 and UE2 are the same, and UE1 and UE2 may be distinguished through different associated beams, and/or terminals are distinguished through generation sequences of energy-saving signals of UE. In addition, if a neighboring cell is distinguished through a transmission occasion, conflicts among a plurality of users on the same transmission occasion may be not used for distinguishing different users.

In summary, in the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

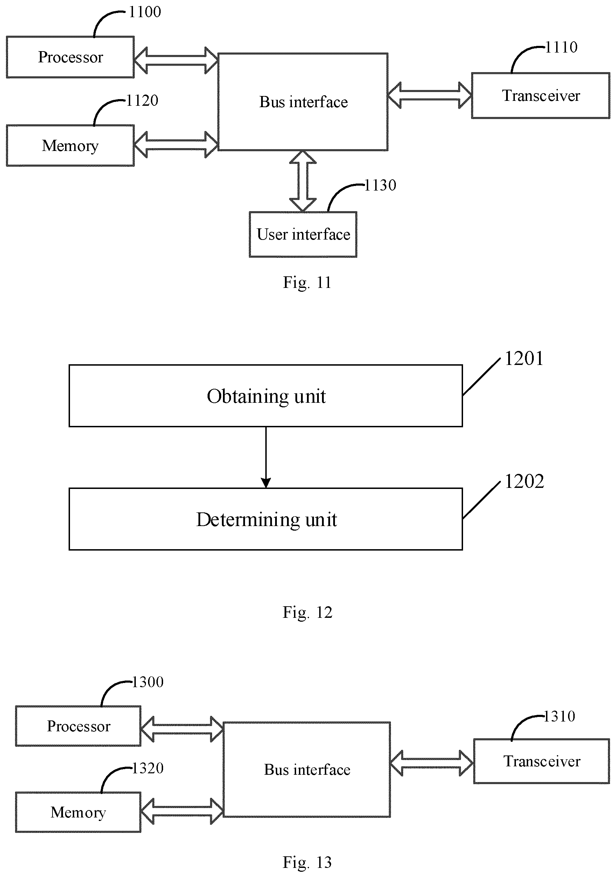

As shown in Fig. 11, the present disclosure further provides in some embodiments a terminal, including a memory 1120, a transceiver 1110, and a processor 1100.

The memory 1120 is configured to store a computer program; the transceiver 1110 is configured to send and receive data under the control of the processor 1100; and the processor 1100 is configured to read the computer program in the memory 1120 and perform the following operations:
obtaining first information, where the first information is used for determining a transmission occasion of an energy-saving signal, and the energy-saving signal is used for assisting in or triggering an energy-saving-related operation of a network-side device; and
determining the transmission occasion of the energy-saving signal according to the first information.

In an optional embodiment, the first information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

In an optional embodiment, the first parameter includes at least one of:
a parameter of a reference signal;
a parameter of a physical layer transmission resource; or
a parameter of a first measurement.

In an optional embodiment, the first parameter is: the first parameter of a serving cell of the terminal, or, the first parameter of a neighboring cell of the terminal.

In an optional embodiment, the reference signal includes at least one of:
an SS/PBCH block SSB;
an SSB burst set;
a reference signal for energy saving of the network-side device;
a CSI-RS;
a TRS;
a PRS; or
an SRS.

In an optional embodiment, the physical layer transmission resource includes at least one of:
an RO;
a scheduling request occasion;
a PDCCH monitoring occasion;
a PUCCH transmission occasion; or
a physical layer shared channel.

In an optional embodiment, the first measurement includes at least one of:
an RRM measurement;
a CSI measurement;
an RLF measurement;
a beam management measurement; or
an energy saving related measurement of the network-side device.

In an optional embodiment, the processor 1100 is further configured to read the computer program in the memory 1120 and perform the following operation:
determining, according to the first parameter and the association relationship between the information of the resource occupied by the transmission occasion and the first parameter, the information of the resource occupied by the transmission occasion of the energy-saving signal.

In an optional embodiment, the information of the resource occupied by the transmission occasion includes at least one of:
time domain resource information;
frequency domain resource information;
spatial domain resource information; or
code domain resource information.

In an optional embodiment, the processor 1100 is further configured to read the computer program in the memory 1120 and perform the following operation:
determining, according to the time domain resource information, at least one of periodic related information of a time domain resource in which the transmission occasion is located, semi-persistent related information of the time domain resource, or aperiodic related information of the time domain resource in one periodicity.

In an optional embodiment, the processor 1100 is further configured to read the computer program in the memory 1120 and perform the following operation:
determining, according to the frequency domain resource information, at least one of an active BWP occupied by a frequency domain resource in which the transmission occasion is located, related information of a specific band occupied by the frequency domain resource, or related information of an initial BWP occupied by the frequency domain resource.

In an optional embodiment, the processor 1100 is further configured to read the computer program in the memory 1120 and perform the following operation:
determining beam information corresponding to the transmission occasion according to the spatial domain resource information, where the beam information is explicitly indicated or implicitly indicated in the spatial domain resource information.

In an optional embodiment, a manner of obtaining the first information includes:
receiving second information transmitted by the network-side device; and/or obtaining third information pre-defined or configured in advance,
where the first information includes the second information and/or the third information.

In an optional embodiment, the third information includes a candidate resource set of transmission occasions pre-defined or configured in advance; and
the second information further includes: indication information transmitted by the network-side device, where the indication information is used for indicating at least one transmission occasion corresponding to the candidate resource set.

In an optional embodiment, the processor 1100 is further configured to read the computer program in the memory 1120 and perform the following operation:
receiving, through first signaling, the second information transmitted by the network-side device, where the first signaling includes at least one of:
broadcast signaling;
common signaling; or
terminal specific signaling.

In an optional embodiment, the processor 1100 is further configured to read the computer program in the memory 1120 and perform the following operation:
transmitting the energy-saving signal on any transmission occasion;
   or
transmitting the energy-saving signal on every transmission occasion;
   or
transmitting the energy-saving signal on at least one subset of a transmission occasion set;
   or
transmitting the energy-saving signal on a transmission occasion when a specific condition is met.

In an optional embodiment, a plurality of terminals transmit energy-saving signals on different transmission occasions, where the transmission occasions of the energy-saving signals determined by the plurality of terminals respectively meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

In an optional embodiment, a plurality of terminals transmit energy-saving signals on a same transmission occasion.

In an optional embodiment, the energy-saving-related operation includes at least one of:
waking up a sleeping cell; or
triggering the network-side device to perform state switching between an energy-saving state and a non-energy-saving state.

In Fig. 11, a bus architecture may include any quantity of interconnected buses and bridges. Specifically, various circuits such as one or more processors represented by the processor 1100 and a storage represented by the memory 1120 are linked together. The bus architecture may also link various other circuits such as peripherals, voltage regulators, and power management circuits, which are well known in the art, and therefore are not further described herein. The bus interface provides an interface. The transceiver 1110 may include a plurality of elements, that is, a transmitter and a receiver, to provide units for communicating with various other apparatuses over transmission media. These transmission media include a wireless channel, a wired channel, an optical fiber, and other transmission media. For different user devices, the user interface 1130 may be an interface capable of externally/internally connecting desired devices, including, but not limited to, a keypad, a display, a speaker, a microphone, and a joystick.

The processor 1100 is responsible for managing the bus architecture and general processing. The memory 1120 can store data used by the processor 1100 while performing operations.

Optionally, the processor 1100 may be a central processing unit (CPU), an application-specific integrated circuit (ASIC), a field-programmable gate array (FPGA) or a complex programmable logic device (CPLD). The processor may alternatively use a multi-core architecture.

The processor invokes the computer program stored in the memory to perform, according to obtained executable instructions, any method provided in the embodiments of the present disclosure. The processor and the memory may be physically separate.

In the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

It needs to be noted that the terminal provided in the embodiments of the present disclosure is a terminal that can perform the foregoing method for transmitting an energy-saving signal. All embodiments of the foregoing method for transmitting an energy-saving signal are applicable to the terminal, and can all achieve the same or similar beneficial effects.

As shown in Fig. 12, the present disclosure further provides in some embodiments an apparatus for transmitting an energy-saving signal, including:
an obtaining unit 1201, configured to obtain first information, where the first information is used for determining a transmission occasion of an energy-saving signal, and the energy-saving signal is used for assisting in or triggering an energy-saving-related operation of a network-side device; and
a determining unit 1202, configured to determine the transmission occasion of the energy-saving signal according to the first information.

In an optional embodiment, the first information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

In an optional embodiment, the first parameter includes at least one of:
a parameter of a reference signal;
a parameter of a physical layer transmission resource; or
a parameter of a first measurement.

In an optional embodiment, the first parameter is: the first parameter of a serving cell of a terminal, or, the first parameter of a neighboring cell of a terminal.

In an optional embodiment, the reference signal includes at least one of:
an SS/PBCH block SSB;
an SSB burst set;
a reference signal for energy saving of the network-side device;
a CSI-RS;
a TRS;
a PRS; or
an SRS.

In an optional embodiment, the physical layer transmission resource includes at least one of:
an RO;
a scheduling request occasion;
a PDCCH monitoring occasion;
a PUCCH transmission occasion; or
a physical layer shared channel.

In an optional embodiment, the first measurement includes at least one of:
an RRM measurement;
a CSI measurement;
an RLF measurement;
a beam management measurement; or
an energy saving related measurement of the network-side device.

In an optional embodiment, the determining unit is further configured to:
determine, according to the first parameter and the association relationship between the information of the resource occupied by the transmission occasion and the first parameter, the information of the resource occupied by the transmission occasion of the energy-saving signal.

In an optional embodiment, the information of the resource occupied by the transmission occasion includes at least one of:
time domain resource information;
frequency domain resource information;
spatial domain resource information; or
code domain resource information.

In an optional embodiment, the apparatus further includes:
a first determining subunit, configured to determine, according to the time domain resource information, at least one of periodic related information of a time domain resource in which the transmission occasion is located, semi-persistent related information of the time domain resource, or aperiodic related information of the time domain resource in one periodicity.

In an optional embodiment, the apparatus further includes:
a second determining subunit, configured to determine, according to the frequency domain resource information, at least one of an active BWP occupied by a frequency domain resource in which the transmission occasion is located, related information of a specific band occupied by the frequency domain resource, or related information of an initial BWP occupied by the frequency domain resource.

In an optional embodiment, the apparatus further includes:
a third determining subunit, configured to determine beam information corresponding to the transmission occasion according to the spatial domain resource information, where the beam information is explicitly indicated or implicitly indicated in the spatial domain resource information.

In an optional embodiment, a manner of obtaining the first information includes:
receiving second information transmitted by the network-side device; and/or obtaining third information pre-defined or configured in advance,
where the first information includes the second information and/or the third information.

In an optional embodiment, the third information includes a candidate resource set of transmission occasions pre-defined or configured in advance; and
the second information further includes: indication information transmitted by the network-side device, where the indication information is used for indicating at least one transmission occasion corresponding to the candidate resource set.

In an optional embodiment, receiving, by the terminal, the second information transmitted by the network-side device includes:
receiving, through first signaling, the second information transmitted by the network-side device, where the first signaling includes at least one of:
broadcast signaling;
common signaling; or
terminal specific signaling.

In an optional embodiment, the apparatus further includes:
a signal transmission unit, configured to transmit the energy-saving signal on any transmission occasion; or
configured to transmit the energy-saving signal on every transmission occasion; or
configured to transmit the energy-saving signal on at least one subset of a transmission occasion set; or
configured to transmit the energy-saving signal on a transmission occasion when a specific condition is met.

In an optional embodiment, a plurality of terminals transmit energy-saving signals on different transmission occasions, where the transmission occasions of the energy-saving signals determined by the plurality of terminals respectively meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

In an optional embodiment, a plurality of terminals transmit energy-saving signals on a same transmission occasion.

In an optional embodiment, the energy-saving-related operation includes at least one of:
waking up a sleeping cell; or
triggering the network-side device to perform state switching between an energy-saving state and a non-energy-saving state.

In the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

It needs to be noted that the apparatus for transmitting an energy-saving signal provided in the embodiments of the present disclosure is an apparatus that can perform the foregoing method for transmitting an energy-saving signal. All embodiments of the foregoing method for transmitting an energy-saving signal are applicable to the apparatus, and can all achieve the same or similar beneficial effects.

As shown in Fig. 13, the present disclosure further provides in some embodiments a network-side device, including a memory 1320, a transceiver 1310, and a processor 1300.

The memory 1320 is configured to store a computer program; the transceiver 1310 is configured to send and receive data under the control of the processor 1300; and the processor 1300 is configured to read the computer program in the memory 1320 and perform the following operation:
transmitting second information to a terminal, where the second information is used for the terminal to determine a transmission occasion of an energy-saving signal, and the energy-saving signal is used for assisting in or triggering an energy-saving-related operation of the network-side device.

In an optional embodiment, the second information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

In an optional embodiment, the first parameter includes at least one of:
a parameter of a reference signal;
a parameter of a physical layer transmission resource; or
a parameter of a first measurement.

In an optional embodiment, the first parameter is: the first parameter of a serving cell of the terminal, or, the first parameter of a neighboring cell of the terminal.

In an optional embodiment, the reference signal includes at least one of:
an SS/PBCH block SSB;
an SSB burst set;
a reference signal for energy saving of the network-side device;
a CSI-RS;
a TRS;
a PRS; or
an SRS.

In an optional embodiment, the physical layer transmission resource includes at least one of:
an RO;
a scheduling request occasion;
a PDCCH monitoring occasion;
a PUCCH transmission occasion; or
a physical layer shared channel.

In an optional embodiment, the first measurement includes at least one of:
an RRM measurement;
a CSI measurement;
an RLF measurement;
a beam management measurement; or
an energy saving related measurement of the network-side device.

In an optional embodiment, the information of the resource occupied by the transmission occasion includes at least one of:
time domain resource information;
frequency domain resource information;
spatial domain resource information; or
code domain resource information.

In an optional embodiment, the time domain resource information includes at least one of:
periodic related information of a time domain resource;
semi-persistent related information of the time domain resource; or
aperiodic related information of the time domain resource in one periodicity.

In an optional embodiment, the frequency domain resource information includes at least one of:
related information of an active BWP occupied by a frequency domain resource;
related information of a specific band occupied by the frequency domain resource; or
related information of an initial BWP occupied by the frequency domain resource.

In an optional embodiment, the spatial domain resource information includes at least one of:
explicitly indicated beam information; or
implicitly indicated beam information.

In an optional embodiment, the second information further includes:
indication information, where the indication information is used for indicating at least one transmission occasion corresponding to a candidate resource set of transmission occasions pre-defined or configured in advance.

In an optional embodiment, the processor 1300 is further configured to read the computer program in the memory 1320 and perform the following operation:
transmitting the second information to the terminal through first signaling, where the first signaling includes at least one of:
broadcast signaling;
common signaling; or
terminal specific signaling.

In an optional embodiment, the processor 1300 is further configured to read the computer program in the memory 1320 and perform the following operation:
performing energy-saving signal monitoring on every preconfigured transmission occasion;
   or
performing energy-saving signal monitoring on one pre-defined transmission occasion;
   or
performing energy-saving signal monitoring on at least one subset of a transmission occasion set;
   or
performing energy-saving signal monitoring on a transmission occasion when a specific condition is met.

In an optional embodiment, the processor 1300 is further configured to read the computer program in the memory 1320 and perform the following operation:
performing a corresponding energy-saving-related operation according to a detected energy-saving signal, where the energy-saving-related operation includes at least one of:
waking up a sleeping cell; or
triggering the network-side device to perform state switching between an energy-saving state and a non-energy-saving state.

In an optional embodiment, a plurality of terminals transmit energy-saving signals on different transmission occasions, where the transmission occasions of the energy-saving signals configured for the plurality of terminals meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

In an optional embodiment, a plurality of terminals transmit energy-saving signals on a same transmission occasion.

In Fig. 13, a bus architecture may include any quantity of interconnected buses and bridges. Specifically, various circuits such as one or more processors represented by the processor 1300 and a storage represented by the memory 1320 are linked together. The bus architecture may also link various other circuits such as peripherals, voltage regulators, and power management circuits, which are well known in the art, and therefore are not further described herein. The bus interface provides an interface. The transceiver 1310 may include a plurality of elements, that is, a transmitter and a receiver, to provide units for communicating with various other apparatuses over transmission media. These transmission media include a wireless channel, a wired channel, an optical fiber, and other transmission media. The processor 1300 is responsible for managing the bus architecture and general processing. The memory 1320 can store data used by the processor 1300 while performing operations.

The processor 1300 may be a CPU, an ASIC, an FPGA or a CPLD. The processor may also use a multi-core architecture.

In the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

It needs to be noted that the network-side device provided in the embodiments of the present disclosure is a network-side device that can perform the foregoing configuration method of a transmission occasion of an energy-saving signal. All embodiments of the foregoing configuration method of a transmission occasion of an energy-saving signal are applicable to the network-side device, and can all achieve the same or similar beneficial effects.

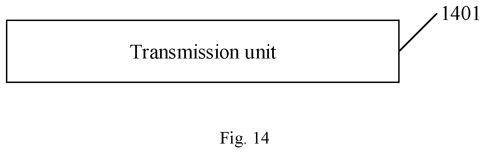

As shown in Fig. 14, the present disclosure further provides in some embodiments a configuration apparatus of a transmission occasion of an energy-saving signal, including:
a transmission unit 1401, configured to transmit second information to a terminal, where the second information is used for the terminal to determine the transmission occasion of the energy-saving signal, and the energy-saving signal is used for assisting in or triggering an energy-saving-related operation of a network-side device.

In an optional embodiment, the second information includes at least one of:
first resource information, where the first resource information is used for directly indicating information of a resource occupied by the transmission occasion; or
second resource information, where the second resource information is used for indirectly indicating information of the resource occupied by the transmission occasion, where the second resource information at least includes an association relationship between the information of the resource occupied by the transmission occasion and a first parameter.

In an optional embodiment, the first parameter includes at least one of:
a parameter of a reference signal;
a parameter of a physical layer transmission resource; or
a parameter of a first measurement.

In an optional embodiment, the first parameter is: the first parameter of a serving cell of the terminal, or, the first parameter of a neighboring cell of the terminal.

In an optional embodiment, the reference signal includes at least one of:
an SS/PBCH block SSB;
an SSB burst set;
a reference signal for energy saving of the network-side device;
a CSI-RS;
a TRS;
a PRS; or
an SRS.

In an optional embodiment, the physical layer transmission resource includes at least one of:
an RO;
a scheduling request occasion;
a PDCCH monitoring occasion;
a PUCCH transmission occasion; or
a physical layer shared channel.

In an optional embodiment, the first measurement includes at least one of:
an RRM measurement;
a CSI measurement;
an RLF measurement;
a beam management measurement; or
an energy saving related measurement of the network-side device.

In an optional embodiment, the information of the resource occupied by the transmission occasion includes at least one of:
time domain resource information;
frequency domain resource information;
spatial domain resource information; or
code domain resource information.

In an optional embodiment, the time domain resource information includes at least one of:
periodic related information of a time domain resource;
semi-persistent related information of the time domain resource; or
aperiodic related information of the time domain resource in one periodicity.

In an optional embodiment, the frequency domain resource information includes at least one of:
related information of an active BWP occupied by a frequency domain resource;
related information of a specific band occupied by the frequency domain resource; or
related information of an initial BWP occupied by the frequency domain resource.

In an optional embodiment, the spatial domain resource information includes at least one of:
explicitly indicated beam information; or
implicitly indicated beam information.

In an optional embodiment, the second information further includes:
indication information, where the indication information is used for indicating at least one transmission occasion corresponding to a candidate resource set of transmission occasions pre-defined or configured in advance.

In an optional embodiment, the transmission unit is further configured to:
transmitting the second information to the terminal through first signaling, where the first signaling includes at least one of:
broadcast signaling;
common signaling; or
terminal specific signaling.

In an optional embodiment, the apparatus further includes:
a monitoring unit, configured to perform energy-saving signal monitoring on every preconfigured transmission occasion; or
configured to perform energy-saving signal monitoring on a pre-defined transmission occasion; or
configured to perform energy-saving signal monitoring on at least one subset of a transmission occasion set; or
configured to perform energy-saving signal monitoring on a transmission occasion when a specific condition is met.

In an optional embodiment, the apparatus further includes:
an operation unit, configured to perform a corresponding energy-saving-related operation according to a detected energy-saving signal, where the energy-saving-related operation includes at least one of:
waking up a sleeping cell; or
triggering the network-side device to perform state switching between an energy-saving state and a non-energy-saving state.

In an optional embodiment, a plurality of terminals transmit energy-saving signals on different transmission occasions, where the transmission occasions of the energy-saving signals configured for the plurality of terminals meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

In an optional embodiment, a plurality of terminals transmit energy-saving signals on a same transmission occasion.

In the embodiments of the present disclosure, a terminal determines a transmission occasion of an energy-saving signal based on first information that is configured in advance by a network and/or is pre-defined, to transmit an energy-saving signal on at least one determined transmission occasion, and wake up or trigger an energy-saving-related operation of a network-side device through the energy-saving signal, thereby keeping an energy-saving state on a network side from impacting a service of the terminal.

It needs to be noted that the configuration apparatus of a transmission occasion of an energy-saving signal provided in the embodiments of the present disclosure is an apparatus that can perform the foregoing configuration method of a transmission occasion of an energy-saving signal. All embodiments of the foregoing configuration method of a transmission occasion of an energy-saving signal are applicable to the apparatus, and can all achieve the same or similar beneficial effects.

It needs to be noted that, in embodiments of the present disclosure, division into the units is an example, and is merely logical function division. During actual implementation, another division manner may be used. In addition, functional units in the embodiments of the present disclosure may be integrated into one processing unit, or each of the units may exist alone physically, or two or more units are integrated into one unit. The integrated unit may be implemented in the form of hardware or a software functional unit.

When the integrated unit is implemented in a form of a software function unit and sold or used as an independent product, the integrated unit may be stored in a processor-readable storage medium. Based on such an understanding, the technical solutions of the present disclosure essentially, or the part contributing to the related art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods in embodiments of the present disclosure. The foregoing storage medium includes any medium that can store program code such as a USB flash drive, a removable hard disk, a read-only memory (ROM), a random access memory (RAM), a magnetic disk, or an optical disc.

The present disclosure further provides in some embodiments a processor-readable storage medium, where the processor-readable storage medium stores a computer program, and the computer program is configured to cause a processor to perform the steps of the embodiments of the foregoing method. The processor-readable storage medium may be any usable medium or data storage device accessible by a processor, including, but not limited to, a magnetic memory (for example, a floppy disk, a hard disk, a magnetic tape, a magneto-optical (MO) disc, or the like), an optical memory (for example, a compact disk (CD), a digital versatile disc (DVD), Blu-ray disc (BD), a high-definition versatile disc (HVD), or the like), a semiconductor memory (for example, a ROM, an erasable programmable read-only memory (EPROM), an electrically erasable programmable read-only memory (EEPROM), a nonvolatile memory (NAND FLASH), a solid state disk (SSD)), and the like.

A person skilled in the art should understand that embodiments of the present disclosure may be provided as a method, a system or a computer program product. Therefore, the present disclosure may use a form of hardware only embodiments, software only embodiments, or embodiments with a combination of software and hardware. In addition, the present disclosure may use a form of a computer program product implemented on one or more computer-usable storage media (including, but not limited to, a disk memory, an optical memory, and the like) that include computer-usable program code.

The present disclosure is described with reference to the flowcharts and/or block diagrams of the method, the device (system), and the computer program product according to the embodiments of the present disclosure. It should be understood that computer-executable instructions may be used to implement each process and/or each block in the flowcharts and/or the block diagrams and a combination of a process and/or a block in the flowcharts and/or the block diagrams. The computer-executable instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These processor-executable instructions may be stored in a processor-readable memory that can instruct the computer or any other programmable data processing device to work in a specific manner, so that the instructions stored in the processor-readable memory generate an artifact that includes instructions apparatus. The instruction apparatus implements a specific function in one or more processes in the flowcharts and/or in one or more blocks in the block diagrams.

The processor-executable instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

Obviously, persons skilled in the art can make various modifications and variations to the present disclosure without departing from the spirit and scope of the present disclosure. In this way, if these modifications and variations to the present disclosure fall within the scope of claims of the present disclosure and equivalent technologies thereof, the present disclosure also intends to cover these modifications and variations.

## Claims

1. A method for transmitting an energy-saving signal, performed by a terminal, the method comprising:
obtaining first information, wherein the first information is used for determining a transmission occasion of the energy-saving signal, and the energy-saving signal is used for assisting in or triggering an energy-saving-related operation of a network-side device; and
determining the transmission occasion of the energy-saving signal according to the first information.

2. The method according to claim 1, wherein a manner of obtaining the first information comprises:
receiving second information transmitted by the network-side device; and/or obtaining third information pre-defined or configured in advance,
wherein the first information comprises the second information and/or the third information.

3. The method according to claim 2, wherein the third information comprises a candidate resource set of transmission occasions pre-defined or configured in advance; and
the second information further comprises: indication information transmitted by the network-side device, wherein the indication information is used for indicating at least one transmission occasion corresponding to the candidate resource set.

4. The method according to claim 2, wherein the receiving the second information transmitted by the network-side device comprises:
receiving, through first signaling, the second information transmitted by the network-side device, wherein the first signaling comprises at least one of:
broadcast signaling;
common signaling; or
terminal specific signaling.

5. The method according to any one of claims 1 to 4, wherein the method further comprises:
transmitting the energy-saving signal on any transmission occasion;
or
transmitting the energy-saving signal on every transmission occasion;
or
transmitting the energy-saving signal on at least one subset of a transmission occasion set;
or
transmitting the energy-saving signal on a transmission occasion when a specific condition is met.

6. The method according to claim 1, wherein a plurality of terminals transmit energy-saving signals on different transmission occasions, wherein the transmission occasions of the energy-saving signals determined by the plurality of terminals respectively meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

7. The method according to claim 1, wherein a plurality of terminals transmit energy-saving signals on a same transmission occasion.

8. The method according to claim 1, wherein the energy-saving-related operation comprises at least one of:
waking up a sleeping cell; or
triggering the network-side device to perform state switching between an energy-saving state and a non-energy-saving state.

9. The method according to claim 1, wherein the first information comprises at least one of:
first resource information, wherein the first resource information is used for indicating information of a resource occupied by the transmission occasion; or
second resource information, wherein the second resource information is used for indicating information of the resource occupied by the transmission occasion, wherein the second resource information at least comprises an association relationship between the information of the resource occupied by the transmission occasion and a first parameter.

10. The method according to claim 9, wherein the first parameter comprises at least one of:
a parameter of a reference signal;
a parameter of a physical layer transmission resource; or
a parameter of a first measurement.

11. The method according to claim 9 or 10, wherein the first parameter is: the first parameter of a serving cell of the terminal, or, the first parameter of a neighboring cell of the terminal.

12. The method according to claim 10, wherein the reference signal comprises at least one of:
a synchronization signal/physical broadcast channel (SS/PBCH) block (SSB);
an SSB burst set;
a reference signal for energy saving of the network-side device;
a channel state information reference signal (CSI-RS);
a tracking reference signal (TRS);
a positioning reference signal (PRS); or
a sounding reference signal (SRS).

13. The method according to claim 10, wherein the physical layer transmission resource comprises at least one of:
a RACH occasion (RO);
a scheduling request occasion;
a physical downlink control channel (PDCCH) monitoring occasion;
a physical uplink control channel (PUCCH) transmission occasion; or
a physical layer shared channel.

14. The method according to claim 10, wherein the first measurement comprises at least one of:
a radio resource management (RRM) measurement;
a channel state information (CSI) measurement;
a radio link failure (RLF) measurement;
a beam management measurement; or
an energy saving related measurement of the network-side device.

15. The method according to any one of claims 9 to 14, wherein the determining, by the terminal, the transmission occasion of the energy-saving signal according to the first information comprises:
determining, by the terminal according to the first parameter and the association relationship between the information of the resource occupied by the transmission occasion and the first parameter, the information of the resource occupied by the transmission occasion of the energy-saving signal.

16. The method according to claim 9 or 15, wherein the information of the resource occupied by the transmission occasion comprises at least one of:
time domain resource information;
frequency domain resource information;
spatial domain resource information; or
code domain resource information.

17. The method according to claim 16, wherein the method further comprises:
determining, according to the time domain resource information, at least one of periodic related information of a time domain resource in which the transmission occasion is located, semi-persistent related information of the time domain resource, or aperiodic related information of the time domain resource in one periodicity.

18. The method according to claim 16, wherein the method further comprises:
determining, according to the frequency domain resource information, at least one of related information of an active bandwidth part (BWP) occupied by a frequency domain resource in which the transmission occasion is located, related information of a specific band occupied by the frequency domain resource, or related information of an initial BWP occupied by the frequency domain resource.

19. The method according to claim 16, wherein the method further comprises:
determining beam information corresponding to the transmission occasion according to the spatial domain resource information, wherein the beam information is explicitly indicated or implicitly indicated in the spatial domain resource information.

20. A configuration method of a transmission occasion of an energy-saving signal, performed by a network-side device, the method comprising:
transmitting second information to a terminal, wherein the second information is used for the terminal to determine the transmission occasion of the energy-saving signal, and the energy-saving signal is used for assisting in or triggering an energy-saving-related operation of the network-side device.

21. The method according to claim 20, wherein the second information comprises at least one of:
first resource information, wherein the first resource information is used for directly indicating information of a resource occupied by the transmission occasion; or
second resource information, wherein the second resource information is used for indirectly indicating information of the resource occupied by the transmission occasion, wherein the second resource information at least comprises an association relationship between the information of the resource occupied by the transmission occasion and a first parameter.

22. The method according to claim 21, wherein the first parameter comprises at least one of:
a parameter of a reference signal;
a parameter of a physical layer transmission resource; or
a parameter of a first measurement.

23. The method according to claim 21 or 22, wherein the first parameter is: the first parameter of a serving cell of the terminal, or, the first parameter of a neighboring cell of the terminal.

24. The method according to claim 22, wherein the reference signal comprises at least one of:
a synchronization signal/physical broadcast channel (SS/PBCH) block (SSB);
an SSB burst set;
a reference signal for energy saving of the network-side device;
a channel state information reference signal (CSI-RS);
a tracking reference signal (TRS);
a positioning reference signal (PRS); or
a sounding reference signal (SRS).

25. The method according to claim 22, wherein the physical layer transmission resource comprises at least one of:
a RACH occasion (RO);
a scheduling request occasion;
a physical downlink control channel (PDCCH) monitoring occasion;
a physical uplink control channel (PUCCH) transmission occasion; or
a physical layer shared channel.

26. The method according to claim 22, wherein the first measurement comprises at least one of:
a radio resource management (RRM) measurement;
a channel state information (CSI) measurement;
a radio link failure (RLF) measurement;
a beam management measurement; or
an energy saving related measurement of the network-side device.

27. The method according to claim 21, wherein the information of the resource occupied by the transmission occasion comprises at least one of:
time domain resource information;
frequency domain resource information;
spatial domain resource information; or
code domain resource information.

28. The method according to claim 27, wherein the time domain resource information comprises at least one of:
periodic related information of a time domain resource;
semi-persistent related information of the time domain resource; or
aperiodic related information of the time domain resource in one periodicity.

29. The method according to claim 27, wherein the frequency domain resource information comprises at least one of:
related information of an active bandwidth part (BWP) occupied by a frequency domain resource;
related information of a specific band occupied by the frequency domain resource; or
related information of an initial BWP occupied by the frequency domain resource.

30. The method according to claim 27, wherein the spatial domain resource information comprises at least one of:
explicitly indicated beam information; or
implicitly indicated beam information.

31. The method according to claim 20, wherein the second information further comprises:
indication information, wherein the indication information is used for indicating at least one transmission occasion corresponding to a candidate resource set of transmission occasions pre-defined or configured in advance.

32. The method according to claim 20, wherein the transmitting the second information to the terminal comprises:
transmitting the second information to the terminal through first signaling, wherein the first signaling comprises at least one of:
broadcast signaling;
common signaling; or
terminal specific signaling.

33. The method according to any one of claims 20 to 32, wherein the method further comprises:
performing energy-saving signal monitoring on every preconfigured transmission occasion;
or
performing energy-saving signal monitoring on one pre-defined transmission occasion;
or
performing energy-saving signal monitoring on at least one subset of a transmission occasion set;
or
performing energy-saving signal monitoring on a transmission occasion when a specific condition is met.

34. The method according to claim 20, wherein the method further comprises:
performing a corresponding energy-saving-related operation according to a detected energy-saving signal, wherein the energy-saving-related operation comprises at least one of:
waking up a sleeping cell; or
triggering the network-side device to perform state switching between an energy-saving state and a non-energy-saving state.

35. The method according to claim 20, wherein a plurality of terminals transmit energy-saving signals on different transmission occasions, wherein the transmission occasions of the energy-saving signals configured for the plurality of terminals meet at least one of the following conditions:
transmission occasions of energy-saving signals of at least two terminals are frequency division multiplexed;
transmission occasions of energy-saving signals of at least two terminals are time division multiplexed;
transmission occasions of energy-saving signals of at least two terminals are code division multiplexed.

36. The method according to claim 20, wherein a plurality of terminals transmit energy-saving signals on a same transmission occasion.

37. A terminal, comprising a memory, a transceiver, and a processor,
wherein the memory is configured to store a computer program; the transceiver is configured to transmit and receive data under the control of the processor; and the processor is configured to read the computer program in the memory and perform the following operations:
obtaining first information, wherein the first information is used for determining a transmission occasion of an energy-saving signal, and the energy-saving signal is used for assisting in or triggering an energy-saving-related operation of a network-side device; and
determining the transmission occasion of the energy-saving signal according to the first information.

38. An apparatus for transmitting an energy-saving signal, comprising:
an obtaining unit, configured to obtain first information, wherein the first information is used for determining a transmission occasion of the energy-saving signal, and the energy-saving signal is used for assisting in or triggering an energy-saving-related operation of a network-side device; and
a determining unit, configured to determine the transmission occasion of the energy-saving signal according to the first information.

39. A network-side device, comprising a memory, a transceiver, and a processor, wherein the memory is configured to store a computer program; the transceiver is configured to transmit and receive data under the control of the processor; and the processor is configured to read the computer program in the memory and perform the following operation:
transmitting second information to a terminal, wherein the second information is used for the terminal to determine a transmission occasion of an energy-saving signal, and the energy-saving signal is used for assisting in or triggering an energy-saving-related operation of the network-side device.

40. A configuration apparatus of a transmission occasion of an energy-saving signal, comprising:
a transmission unit, configured to transmit second information to a terminal, wherein the second information is used for the terminal to determine the transmission occasion of the energy-saving signal, and the energy-saving signal is used for assisting in or triggering an energy-saving-related operation of a network-side device.

41. A processor-readable storage medium, wherein the processor-readable storage medium stores a computer program, and the computer program is configured to cause a processor to perform the method according to any one of claims 1 to 19, or the computer program is configured to cause a processor to perform the method according to any one of claims 20 to 36.
